# EUROPEAN PATENT APPLICATION

(11) **EP 2 660 684 A1**
(43) Date of publication of application: **06.11.2013**
(21) Application number: 12166170.6
(22) Date of filing: 30.04.2012
(51) Int. Cl.: G06F 3/023, G06F 3/048

(54) **User interface for changing an input state of a virtual keyboard**

(71) Applicant: BlackBerry Limited, Waterloo, ON N2L 3W8 (CA)
(72) Inventor: Griffin, Jason Tyler, Waterloo, Ontario N2L 3W8 (CA); Pasquero, Jerome, Waterloo, Ontario N2L 3W8 (CA); Mckenzie, Donald Somerset, Waterloo, Ontario N2L 3W8 (CA); Hamilton, Alistair Robert, Waterloo, Ontario N2L 3W8 (CA)
(74) Representative: Patel, Binesh

(57) **Abstract**

A user interface for changing an input state of a virtual keyboard for a touch-sensitive display of an electronic device is provided. The method comprises: displaying the virtual keyboard on the touch-sensitive display, wherein the virtual keyboard includes a plurality of character keys, each key in the plurality of character keys corresponding to a character in a first input character set when the virtual keyboard is in a first input state; and displaying a graphical user interface (GUI) element which overlays at least a designated key when a designated touch gesture is detected in association with the designated key when the virtual keyboard is in the first input state, wherein the GUI element includes a gestural guide for a first touch gesture which transitions the virtual keyboard from the first input state to a second input state.

## Description

### RELATED APPLICATION DATA

The present disclosure relates to commonly owned U.S. patent application no. 13/373,356, filed November 10, 2011, which is incorporated herein by reference in its entirety.

### TECHNICAL FIELD

The present disclosure relates generally to input methodologies for electronic devices, such as handheld electronic devices, and more particularly, to a user interface for changing an input state of a virtual keyboard.

### BACKGROUND

Increasingly, electronic devices, such as computers, netbooks, cellular phones, smart phones, personal digital assistants, tablets, etc., have touch-sensitive displays that allow a user to input characters into an application, such as a word processor or email application. Character input on touch-sensitive displays can be a cumbersome task due to, for example, the small touch-sensitive display area and the limited input character set which can be displayed on the display.

### BRIEF DESCRIPTION OF THE DRAWINGS

Fig. 1 is an example block diagram of an electronic device, consistent with embodiments disclosed herein.

Fig. 2 is a flowchart illustrating an example method for predicting a selected set of characters, consistent with embodiments disclosed herein.

Figs. 3A, 3B, 3C, and 3D show example front views of a touch-sensitive display, consistent with embodiments disclosed herein.

Figs. 4A and 4B show example front views of a touch-sensitive display, consistent with embodiments disclosed herein.

Fig. 5 shows an example front view of a touch-sensitive display, consistent with embodiments disclosed herein.

Figs. 6A, 6B, and 6C show example front views of a touch-sensitive display, consistent with embodiments disclosed herein.

Fig. 7 shows an example front view of a touch-sensitive display, consistent with embodiments disclosed herein.

Figs. 8A and 8B show example front views of a touch-sensitive display, consistent with embodiments disclosed herein.

Fig. 9 shows an example front view of a touch-sensitive display, consistent with embodiments disclosed herein.

Figs. 10A and 10B show example front views of a touch-sensitive display, consistent with embodiments disclosed herein.

Figs. 11A and 11B show example front views of a touch-sensitive display, consistent with embodiments disclosed herein.

Figs. 12A and 12B show example front views of a touch-sensitive display, consistent with embodiments disclosed herein.

Figs. 13A and 13B show example front views of a touch-sensitive display, consistent with embodiments disclosed herein.

Figs. 14A, 14B, and 14C show example front views of a touch-sensitive display, consistent with embodiments disclosed herein.

Fig. 15 shows an example front view of a touch-sensitive display, consistent with embodiments disclosed herein.

Fig. 16 shows an example front view of a touch-sensitive display, consistent with embodiments disclosed herein.

Fig. 17 is a flowchart illustrating an example method, consistent with embodiments disclosed herein.

Fig. 18 is a flowchart illustrating an example method, consistent with embodiments disclosed herein.

Fig. 19 is a flowchart illustrating an example method, consistent with embodiments disclosed herein.

Fig. 20 shows an example front view of a virtual keyboard for display on a touch-sensitive display, consistent with embodiments disclosed herein.

Fig. 21 is a flowchart illustrating an example method consistent with embodiments disclosed herein.

Figs. 22A to 22F show example front views of a virtual keyboard for display on a touch-sensitive display, consistent with embodiments disclosed herein.

Figs. 23A to 23D show example front views of a virtual keyboard for display on a touch-sensitive display, consistent with embodiments disclosed herein.

Figs. 24A to 24D show example front views of a virtual keyboard for display on a touch-sensitive display, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touch-sensitive display) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering a suggestion for completing the word. But these solutions can have limitations, often requiring the user to input most or all of the characters in a word before the solution suggests the word the user is trying to input. Even then, a user often has to divert focus from the keyboard to view and consider the suggested word displayed elsewhere on the display of the electronic device, and thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the input area, and then back at the virtual keyboard.

The efficiency of predictive text input solutions, from the perspective of both device resources and user experience, sometimes depends on the particular user and the nature of the interaction of the particular user with the touch-sensitive display. Virtual keyboard usage patterns can be broadly categorized as being of two types: "rapid" and "precise". Rapid typists are typically fast two-thumb typists which rely on auto-correction. This usage pattern corresponds most closely with experienced, frequent touch-sensitive display users. Precise typists are typically careful typists who are inclined to use a single finger point to tap keys in the virtual keyboard, and often choose predictions as an input accelerator rather than auto-correction. This usage pattern corresponds most closely with novice/new touch-sensitive display users as well as potentially one-handed (thumb) use situations.

Accordingly, example embodiments described herein permit the user of an electronic device to input characters without diverting attention from the keyboard and subsequently refocusing. Example embodiments described herein also seek to accommodate different user types, such as rapid typists and precise typists, and the different efficiency challenges presented by the different user types.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated set of characters. References to orientation contained herein, such as horizontal and vertical, are relative to the screen orientation of a graphical user interface rather than any physical orientation.

In accordance with one embodiment, there is provided a method comprising receiving an input of a character from a virtual keyboard displayed on a display; generating one or more sets of predicted input characters based on the input character; and displaying one or more of the generated sets of predicted input characters.

In accordance with another embodiment, there is provided a method for changing an input state of a virtual keyboard for a touch-sensitive display of an electronic device, the method comprising: displaying the virtual keyboard on the touch-sensitive display, wherein the virtual keyboard includes a plurality of character keys, each key in the plurality of character keys corresponding to a character in a first input character set when the virtual keyboard is in a first input state; and displaying a graphical user interface (GUI) element which overlays at least a designated key when a designated touch gesture is detected in association with the designated key when the virtual keyboard is in the first input state, wherein the GUI element includes a gestural guide for a first touch gesture which transitions the virtual keyboard from the first input state to a second input state.

In some examples, the designated key is a Shift key.

In some examples, the designated key is a Symbol key.

In some examples, the method further comprises transitioning the virtual keyboard from the first input state to the second input state in response to detecting the first touch gesture when the GUI is displayed.

In some examples, the method further comprises transitioning the virtual keyboard from the second input state to the first input state in response to detecting a designated touch input when the virtual keyboard is in the second input state. In some examples, the virtual keyboard remains in the second input state until the designated touch input is detected. In some examples, the designated touch input is a tap associated with the designated key.

In some examples, the method further comprises transitioning the virtual keyboard from the first input state to the second input state in response to detecting a second touch gesture associated with the designated key when the GUI is not displayed. In some examples, the second touch gesture is a press-and-hold associated with the designated key.

In some examples, the method further comprises displaying a first visual cue associated with the designated key when the virtual keyboard is in the second input state.

In some examples, the method further comprises transitioning the virtual keyboard from the first input state to a third input state in response to detecting a third touch gesture associated with the designated key when the GUI is not displayed. In some examples, the method further comprises transitioning the virtual keyboard from the third input state to the first input state in response to detecting a character input when the virtual keyboard is in the third input state. In some examples, the virtual keyboard inputs a first version of a character in the first input character set when the virtual keyboard is in the first input state, wherein the virtual keyboard inputs a second version of a character in the first input character set when the virtual keyboard is in the third input state. In some examples, the first version of a character in the input character set is a lower case letter and the second version of a character in the input character set is an upper case letter.

In some examples, each key in the plurality of character keys corresponds to a character in a second input character set when the virtual keyboard is in the third input state.

In some examples, the third touch gesture is a tap associated with the designated key. In some examples, the method further comprises displaying a second visual cue associated with the designated key when the virtual keyboard is in the third input state.

In some examples, the first touch gesture is a drag or swipe associated with the designated key.

In some examples, the designated touch gesture is a moving touch gesture.

In some examples, the GUI element is a slider having a slider bar which provides the gestural guide and a slider button moveable along the slider bar.

In some examples, the slider button represents the designated key.

In some examples, the virtual keyboard inputs a first version of a character in the first input character set when the virtual keyboard is in the first input state, wherein the virtual keyboard inputs a second version of a character in the first input character set when the virtual keyboard is in the second input state. In some examples, the first version of a character in the input character set is a lower case letter and the second version of a character in the input character set is an upper case letter.

In some examples, the method further comprises the plurality of character keys corresponds to a character in a second input character set when the virtual keyboard is in the second input state.

In some examples, the method further comprises transitioning the virtual keyboard from the second input character set to a third input character set in response to detecting a designated touch input associated with another designated key when the virtual keyboard is in the second input state.

In some examples, the other designated key is a toggle key.

In some examples, the method further comprises displaying a first visual cue in association with the designated key when the virtual keyboard includes the second character set; and displaying a second visual cue in association with the designated when the virtual keyboard includes the third character set.

In accordance with a further embodiment, there is provided an electronic device, comprising: a touch-sensitive display having a virtual keyboard displayed thereupon; and a processor coupled to the touch-sensitive display. The processor is configured to perform methods described herein.

In accordance with a further embodiment, there is provided a keyboard displayed on a touch-sensitive display of an electronic device. The keyboard can include a plurality of keys. The keyboard is configured to perform methods described herein.

In accordance with a further embodiment, there is provided a non-transitory computer readable (storage) medium is provided that includes computer executable instructions for performing methods described herein. The computer readable medium may be part of a computer program product.

These example embodiments, as well as those described below, permit the user of an electronic device to input a set of characters without diverting attention from the virtual keyboard and subsequently refocusing. Predicting and providing various options that the user is likely contemplating, and doing so at appropriate locations on the keyboard, allows the focus to remain on the keyboard, which enhances efficiency, accuracy, and speed of character input.

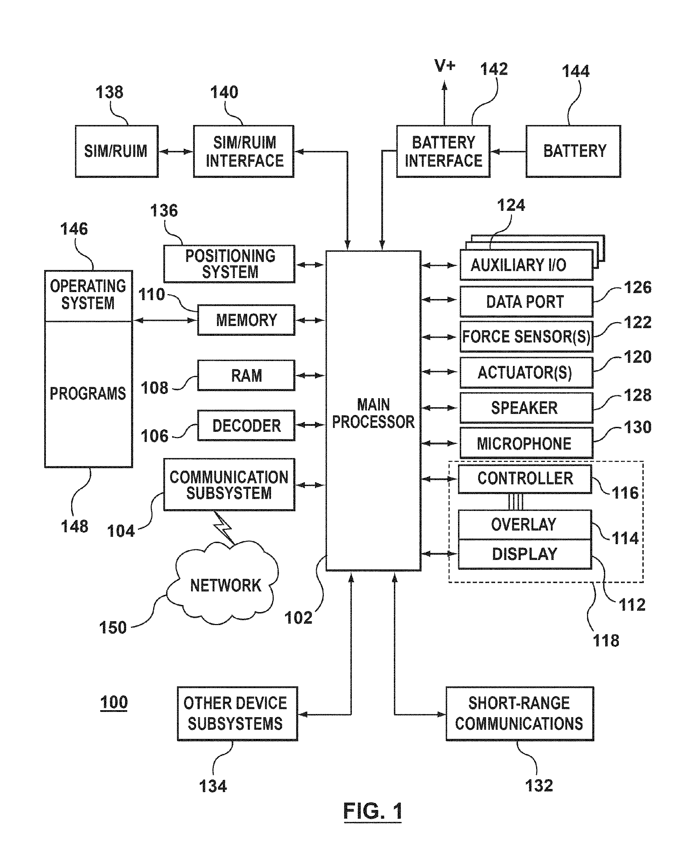

Fig. 1 is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touch-sensitive display 118.

Touch-sensitive display 118 includes a display 112 with a touch-active overlay 114 connected to a controller 116. User-interaction with a graphical user interface (GUI), such as a virtual keyboard rendered and displayed on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touch-sensitive display 118 via main processor 102. Characters are inputted when the user touches the touch-sensitive display at a location associated with said character.

Touch-sensitive display 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touch-sensitive display have been described, any suitable type of touch-sensitive display for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touch-sensitive display technology used in any given embodiment will depend on the electronic device and its particular application and demands.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

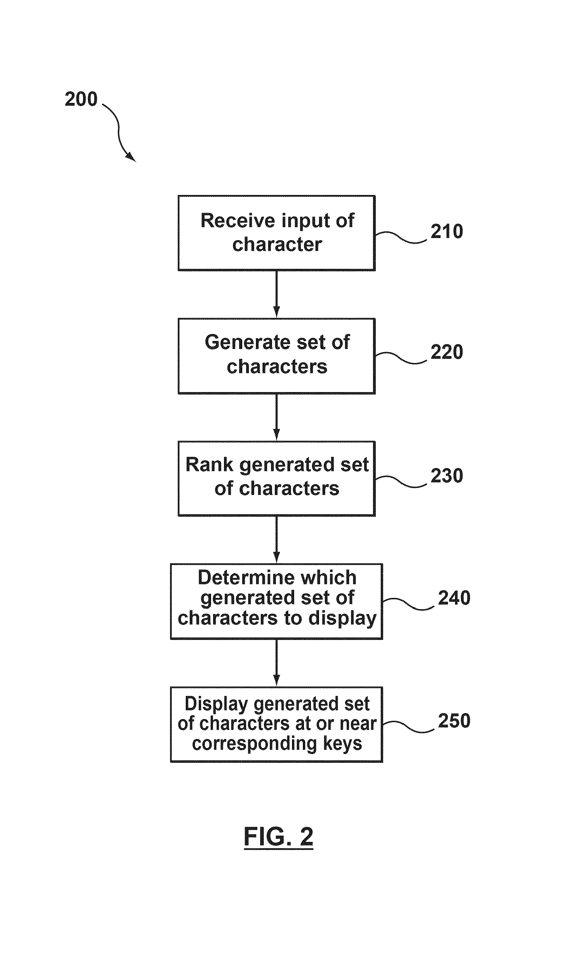

Fig. 2 is a flowchart illustrating an example method 200 for predicting a set of characters, consistent with example embodiments disclosed herein. As used herein, a predictor (such as a predictive algorithm, program or firmware) includes a set of instructions that when executed by a processor (for example, main processor 102), can be used to disambiguate for example, received ambiguous text input and provide various options, such as a set of characters (for example, words or phrases, acronyms, names, slang, colloquialisms, abbreviations, or any combination thereof) that a user might be contemplating. A predictor can also receive otherwise unambiguous text input and predict a set of characters potentially contemplated by the user based on several factors, such as context, frequency of use, and others as appreciated by those skilled in the field. The predictor may predict a set of characters which completes a received text input (known as auto-completion), correct received text input (known as auto-correction), or a combination thereof (e.g., completing the text input while correcting previously entered text input).

For example, in the predictor is a program 148 residing in memory 110 of electronic device 100. Accordingly, method 200 includes a predictor for generating a set of characters corresponding to a subsequent candidate input character based on inputted characters. It can be appreciated that while the example embodiments described herein are directed to a predictor program executed by a processor, the predictor can be executed by a virtual keyboard controller.

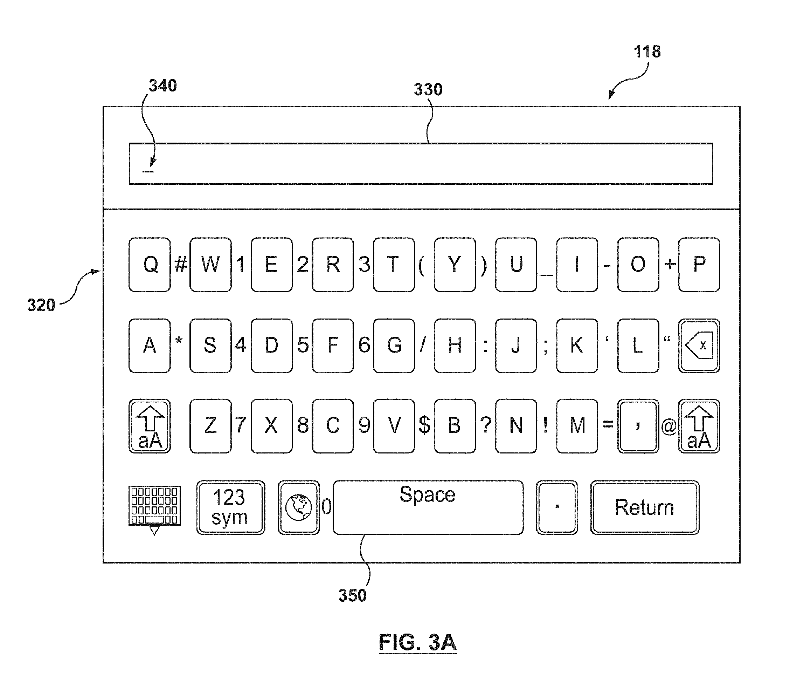

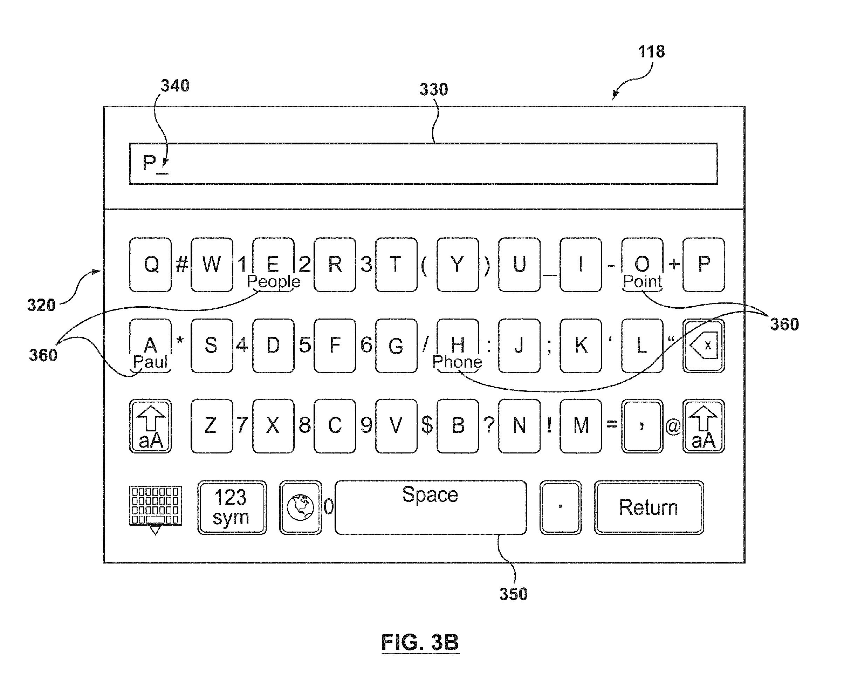

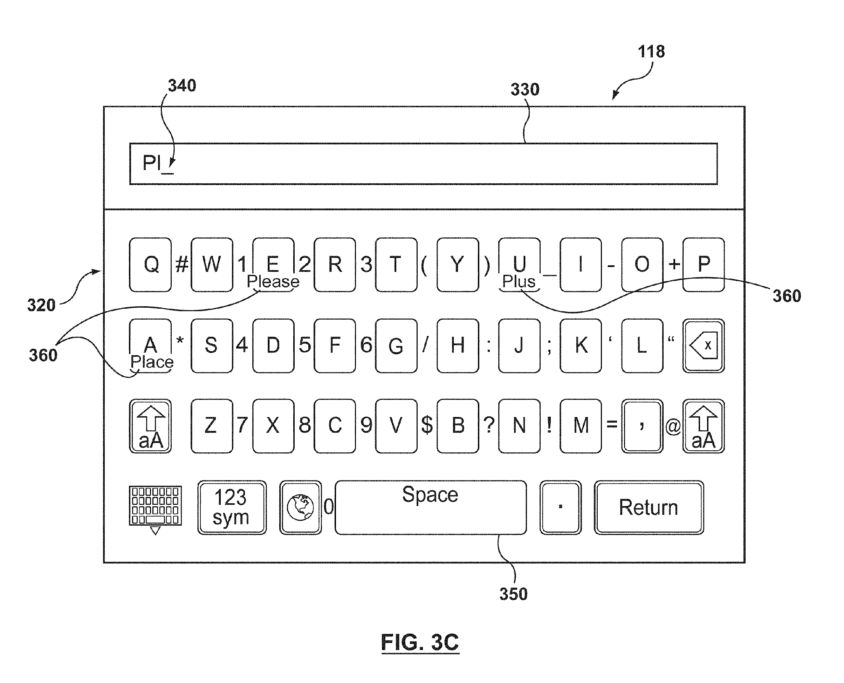

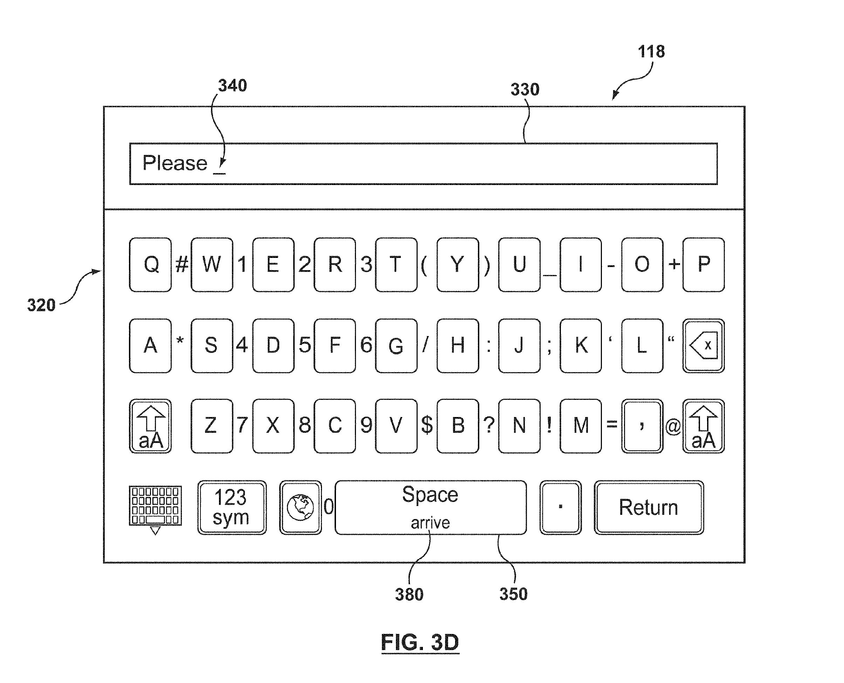

Method 200 begins at block 210, where the processor receives an input of one or more characters from a virtual keyboard displayed on a touch-sensitive display. As used herein, however, a character can be any alphanumeric character, such as a letter, a number, a symbol, a punctuation mark, and the like. The inputted character can be displayed in an input field (for example, input field 330 further described below in Figs. 3-9) that displays the character the user inputs using the virtual keyboard.

At block 220, the processor generates one or more sets of characters such as words or phrases, acronyms, names, slang, colloquialisms, abbreviations, or any combination thereof based on the input received in block 210. The set of characters includes, for example, a set of characters that are stored in a dictionary (for example, a word or an acronym) of a memory of the electronic device, a set of characters that were previously inputted by user (for example, a name or acronym), a set of characters based on a hierarchy or tree structure, a combination thereof, or any set of characters that are selected by a processor based on defined arrangement.

In some embodiments, the processor can use contextual data for generating a set of characters. Contextual data considers the context of characters in the input field. Contextual data can include information about, for example, set of characters previously inputted by the user, grammatical attributes of the characters inputted in the input field (for example, whether a noun or a verb is needed as the next set of characters in a sentence), or any combination thereof. For example, if the set of characters "the" has already been inputted into display, the processor can use the contextual data to determine that a noun-instead of a verb-will be the next set of characters after "the". Likewise, if the set of characters "Guy Lafleur played in the National Hockey" was inputted, based on the context, the processor can determine the subsequent set of characters is likely "League". Using the contextual data, the processor can also determine whether an inputted character was incorrect. For example, the processor can determine that the inputted character was supposed to be a "w" instead of an "a", given the proximity of these characters on a QWERTY virtual keyboard.

Processor 102 can also include an affix as part of the set of characters, such as an adverb ending, an adjective ending, different verb tenses, and the like, or any other change to make a complete set of characters. Processor 102 can also use the received input to generate affixes, such as plural endings or plural forms. Any known predictive technique or software can be used to process the received input and the contextual data in generating set of characters at block 220.

In some example embodiments, the set of characters generated at block 220 can begin with the same character received as input at block 210. For example, if the characters "pl" have been received as input using a virtual keyboard, these characters will be received by the processor as the input. In these embodiments, the set of characters generated at block 220 would all begin with "pl", such as "please" or "plot." There is no limit on the length of a generated set of characters. Regarding affixes, if the user has input the characters "child", for example, the affixes generated at block 220 could include "-ren", to make the set of characters "children", or "-ish", to make the set of characters "childish".

In some example embodiments, the set of characters generated at block 220 can simply include the same characters received as input at block 210. For example, if the received input is an "x," the processor may generate "example" or "xylophone" as the set of characters. Such sets of characters can be generated using the contextual data.

In another example embodiment, if input has not been received or a delimiter (such as a <SPACE>) has been used, the generated set of characters can be placed on subsequent candidate input characters that correspond to the first letter of the generated set of characters.

Next, at block 230, the generated set of characters from block 220 can be ranked. The rankings reflect the likelihood that a candidate set of characters might have been intended by the user, or might be chosen by a user compared to another candidate set of characters.

In some embodiments, contextual data can be included in the ranking at block 230. In some embodiments, the electronic device can be configured to rank nouns or adjectives higher based on the previous inputted set of characters. If the inputted set of characters is suggestive of a noun or adjective, the processor, using the contextual data, can rank the nouns or adjectives corresponding to what the user is typing higher at block 230. In an additional embodiment, set of characters including adjective affixes (such as "-ish" or "-ful"), phrases, plurals, or combinations thereof can also be ranked. Contextual data can increase the likelihood that the higher ranked generated set of characters is intended by a user. In some embodiments, contextual data can include information about which programs or applications are currently running or being used by a user. For example, if the user is running an email application, then set of characters associated with that user's email system, such as set of characters from the user's contact list, can be used to determine the ranking. N-grams, including unigrams, bigrams, trigrams, and the like, can be also used in the ranking of the sets of characters. Alternatively, the geolocation of the electronic device or user can be used in the ranking process. If, for example, the electronic device recognizes that a user is located at his/her office, then sets of characters generally associated with work can be ranked higher in the list. If, on the other hand, the device determines a user is at the beach, then sets of characters generally associated with the beach can be ranked higher in the list.

At block 240, the processor determines which of the set of characters to display based on the ranking. For example, higher ranked sets of characters are more likely to be determined that they should be displayed. A ranker (such as a ranking algorithm, program or firmware) includes a set of instructions that when executed by a processor (for example, main processor 102), can be executed to determine ranking in this regard. In some embodiments, the ranker is a program 146 residing in memory 110 of electronic device 100.

At block 250, the determined set of characters is displayed at a location on the keyboard corresponding to a subsequent candidate input character, predicted as the next character in a word that the user might input. For instance, if a user inputs "pl", the word "please" would be displayed on the key for the letter "e"-the subsequent candidate input character for that word. Similarly, the word "plus" would also be displayed on the key for the letter "u"-another subsequent candidate input character. The subsequent candidate input character can be any alphanumeric character, such as a letter, number, symbol, punctuation mark, and the like.

In some embodiments, the generated set of characters is displayed at or near keys on the virtual keyboard associated with the subsequent candidate input characters. Its placement at or near a key can depend, for instance, on the size of the word or the number of nearby subsequent candidate input characters and the size of their associated set of characters.

The set of characters can be displayed in a manner that will attract the user's attention. In some embodiments, a displayed set of character's appearance can be enhanced or changed in a way that makes the set more readily visible to the user. For example, displayed sets of characters can be displayed with backlighting, highlighting, underlining, bolding, italicizing, using combinations thereof, or in any other way for making the displayed set of characters more visible.

When identifying the set of characters for display at block 240, the processor can limit the displayed set of characters to the top few or choose among the higher ranked sets of characters. For example, if two sets of characters are both ranked high, and these sets of characters would otherwise be displayed at the same key, the electronic device could be configured to display only the highest ranked generated set of characters. In other embodiments, both sets of characters could be displayed at or around the same key, or one set of characters is displayed at one key while the second set of characters is displayed at another key. In some example embodiments, the processor can take into account the display size to limit the number of generated sets of characters.

In some embodiments, the ranking could be used to choose between two or more sets of characters that, when displayed on adjacent subsequent candidate input characters, would overlap with each other (e.g., because of their respective lengths). In such a scenario, the electronic device could be configured to display the higher ranked set of characters on the keyboard. For example, if the set of characters "establishment" is ranked first in a list generated at block 240 after the letter "E" is inputted, "establishment" could be displayed at the "S" key. When displayed on a virtual keyboard, however, its length might occupy some space on the "A" key and the "D" key, potentially blocking a set of characters that would be displayed on or around those keys. At block 240, it could be determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the set of characters, effectively permitting a long set of characters to be displayed within or mostly within the boundaries of a single key simultaneously with other sets of characters on adjacent keys of a virtual keyboard.

Figures 3-9 illustrate a series of example front views of the touch-sensitive display 118 having a virtual keyboard 320, consistent with example embodiments disclosed herein. Starting with Fig. 3A, touch-sensitive display 118 includes a virtual keyboard 320 that is touch-active. The position of the virtual keyboard 320 is variable such that virtual keyboard 320 can be placed at any location on touch-sensitive display 118. Touch-sensitive display 118 could be configured to detect the location and possibly pressure of one or more objects at the same time. Touch-sensitive display 118 includes two areas: (1) an input field 330 that displays characters after a user has inputted those characters and (2) the virtual keyboard 320 that receives the input from the user. As described throughout this disclosure, a virtual keyboard displays a set of characters at a location on the keyboard corresponding to a subsequent candidate input character that might be received as input from the user.

The examples and embodiments illustrated in Figures 3-9 can be implemented with any set of characters, such as words, phrases, acronyms, names, slang, colloquialisms, abbreviations, or any combination thereof.

As shown in Fig. 3A, touch-sensitive display 118 displays a standard QWERTY virtual keyboard 320; however, any conventional key configuration can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes space key 350 as well as other keys that can provide different inputs, such as punctuation, letters, numbers, enter or return keys, and function keys. While virtual keyboard 320 is shown as having a square shape, it can have any other shape (such as an arch).

As shown in Fig. 3A, touch-sensitive display 118 displays input field 330, which displays the characters the user inputs using virtual keyboard 320. Input field 330 includes a cursor 340, which can be an underscore (as shown) or any other shape, such as a vertical line. Cursor 340 represents the character space where a next inputted character, selected character, or selected set of characters will be inserted.

As shown in Fig. 3B, when a user inputs a character (in this example, "P"), this character is displayed in input field 330 and cursor 340 moves to the character space where the next inputted character or word will be inserted. After the character is inputted, a predictor (such as, a predictive algorithm or a circuit) can generate set of characters 360 (for this embodiment) that all begin with the character "P", or characters if more than one character is input. The generated set of characters are displayed at a location on the keyboard corresponding to a subsequent candidate input character that might be received as input from the user. As mentioned, generated set of characters 360 can be displayed at or near the key corresponding to the subsequent candidate input characters (for example, under the respective A, E, H, and O keys of the virtual keyboard 320). Indeed, slightly shifting the display location of the generated set of characters can address overcrowding of subsequent candidate input characters, effectively permitting more set of characters to be displayed.

In the example shown in Fig. 3B, "P" is received as input and a predictor generates several set of characters 360, which are displayed at keys corresponding to each generated set of characters' subsequent candidate input character. As shown in Fig. 3B, "People" is placed at the "E" key because the next letter after "P" of "People" is "E"; "Paul" will be place at the "A" key because the next letter after "P" of "Paul" is "A"; "Phone" will be placed at the "H" key because the next letter after "P" of "Phone" is "H"; and so on. It should be noted that any of the letters in the set of characters can be upper case or lower case.

In the embodiment shown in Fig. 3C, "L" is next input received by touch-sensitive display, and a predictor determines several generated set of characters 360, which are displayed at a key corresponding to subsequent candidate input characters (for example, under the respective A, E, and U keys of the virtual keyboard 320), for the current position of cursor 340, which is in the third character position, as shown in input field 330. In another embodiment, a generated set of characters 360 can be presented such as to include the subsequent candidate input character. For example, the set of characters "Please" can be displayed so that the characters "PI" are displayed before the "E" character on the "E" key, and the characters "ase" can be placed after the "E" character on the "E" key. Further, in this or other embodiments, the displayed "E" can be presented in a manner that differs from the "PI" and "ase", thereby enabling the user to still recognize it as the "E" key while also making it readily visible so that the user can either input the generated set of characters "Please" or input the character "E". The "E" can be capitalized or in lowercase. In other embodiments, an affix can be displayed at the key. Using the example of the set of characters "Please" above, the "ase" could be displayed at the "E" key so the set of characters fragment "-ease" or "-Ease" would appear.

If the user inputs a generated set of characters, that set of characters is placed in input field 330. This can be seen in Fig. 3D, where the user has inputted generated set of characters "Please," resulting in its placement in the input field. A space is inserted after the set of characters if the user wants to input a new set of characters. A user could input a generated set of characters in various ways, including in a way that differs from a manner of inputting a character key. For example, to input a generated set of characters, a user could use a finger or stylus to swipe the generated set of characters. As used herein, swiping includes swiping the set of characters itself or swiping or touching near the set of characters. For the latter embodiment, the device can detect a swipe or touch near a set of characters, be it a generated set of characters or a predicted set of characters (to be described below), and through the use of a predictor, determine the set of characters the user intended to input. In another embodiment, the user could press a key for a predetermined period of time, such as a long press. That key can be, for example, the key corresponding to the subsequent candidate input character of the set of characters. So, if the set of characters "Please" is intended to be inputted instead of "E", the electronic device 100 can be configured to require that the "E" key be pressed for a predetermined period of time to trigger the input of "Please".

After a generated set of characters 360 has been determined, as shown in Fig. 3D, a predicted set of characters 380 can be displayed, shown here at space key 350. Predicted set of characters 380 can differ from generated set of characters 360 (as shown in Figs. 3A-3C) and is the system's attempt to predict the next set of characters a user might be contemplating. A predictor is used to determine predicted set of characters 380. As with displayed generated set of characters 360, predicted set of characters 380 can be received as input in any number of ways, including receiving a swiping of the predicted set of characters with a finger or stylus or receiving a pressing of a key (such as the space key or another designated key) for a predetermined period of time (long press).

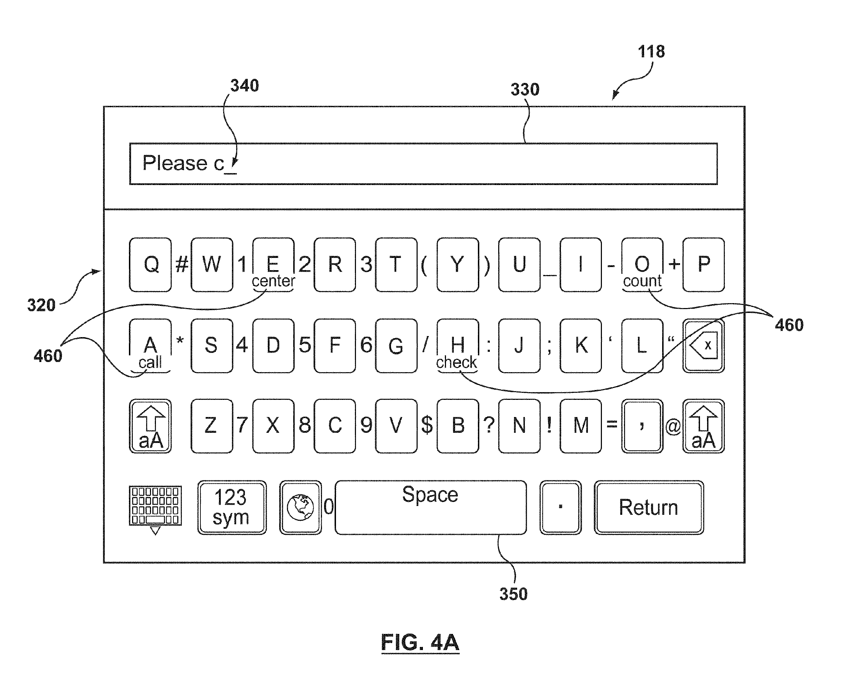

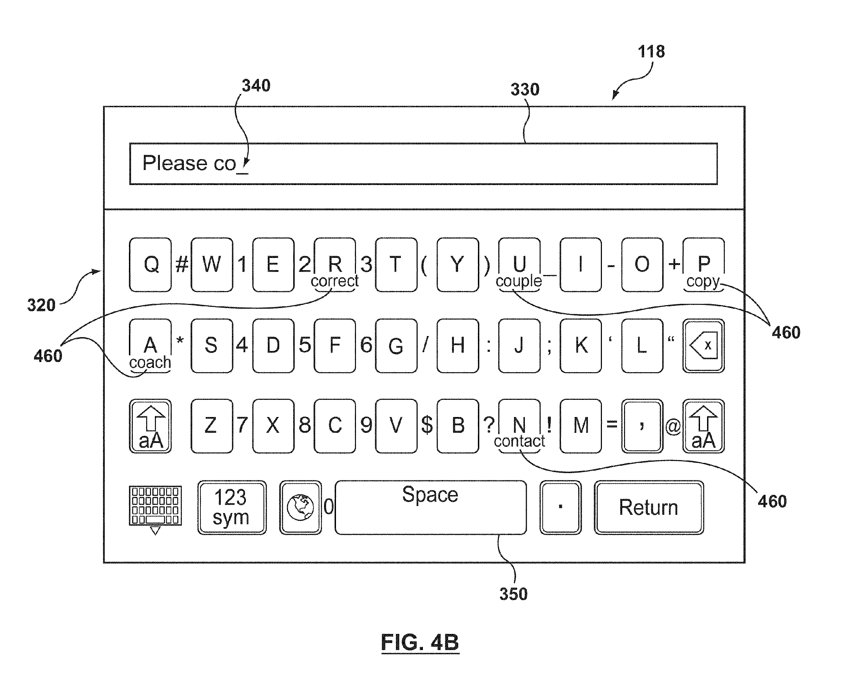

In Fig. 4A, electronic device 100 receives "C" as input from virtual keyboard 320. Again, a predictor determines generated set of characters 460 based in part on the received input. In Fig. 4B, electronic device 100 receives "O" as input from the virtual keyboard and outputs the "O" in input field 330. As shown in Fig. 4A, the set of characters "count" was displayed at the "O" key after the input of the "C" character was received. Since the "O" key was pressed in a manner to only input the "O" character, as shown in Fig. 4B, an "O" is displayed as second character of the currently inputted set of characters, and the set of characters "count" is not inputted by the user. Alternatively, if a user wanted to input the generated set of characters "count," the user can input the "O" key in Fig. 4A in a manner different from a manner of inputting the "O" key, such as by swiping the set of characters "count" or by a long press on the "O" key, as opposed to tapping. Returning to Fig. 4B, after the "O" is inputted, generated set of characters 460 are displayed at the keys corresponding to subsequent candidate input characters, as shown in Fig. 4B.

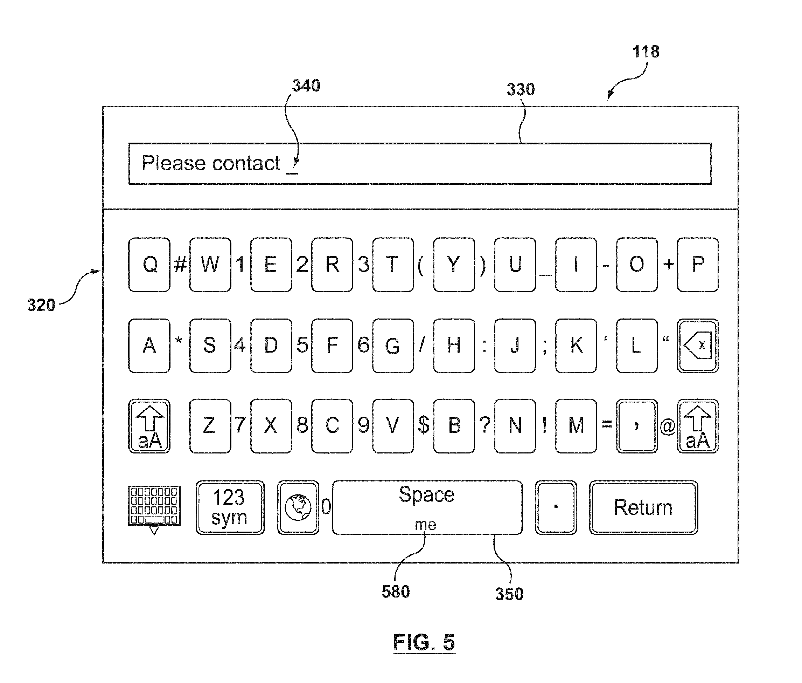

Fig. 5 shows input field 330 displaying the set of characters "contact" followed by a space. In that instance, the user inputted the generated set of characters "contact" 460 as was shown in Fig. 4B at the "N" key. Referring back to Fig. 5, a <SPACE> character is now automatically inserted after the generated word in the input field. Predicted word "me" 580 is now displayed on space key 350.

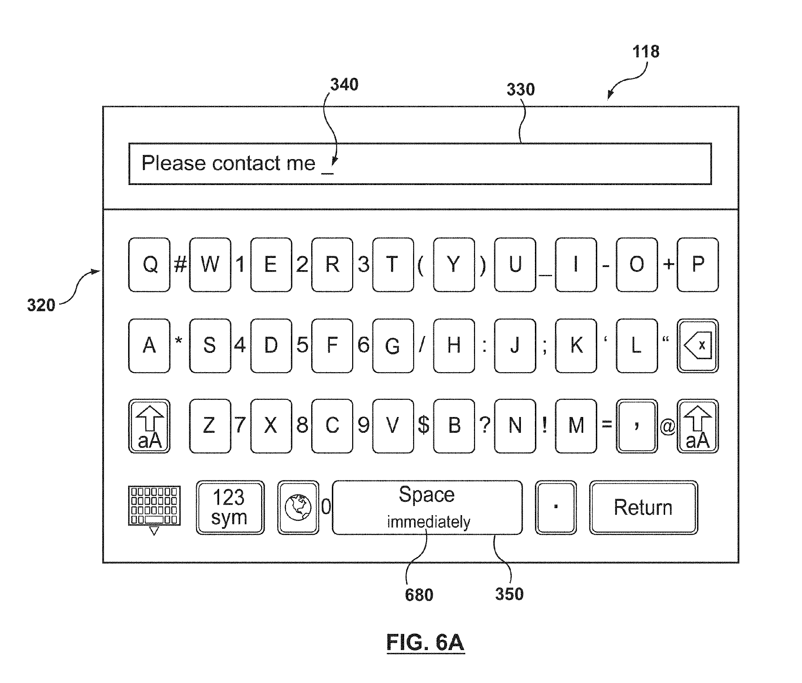

If the predicted word "me" 580 is received as input, the word "me" 580 is then displayed in input field 330 followed by a space as shown in Fig. 6A, which then shows predicted word 680 "immediately" displayed on space key 350. The predicted word is presented after a completed word and space have been displayed in input field 330.

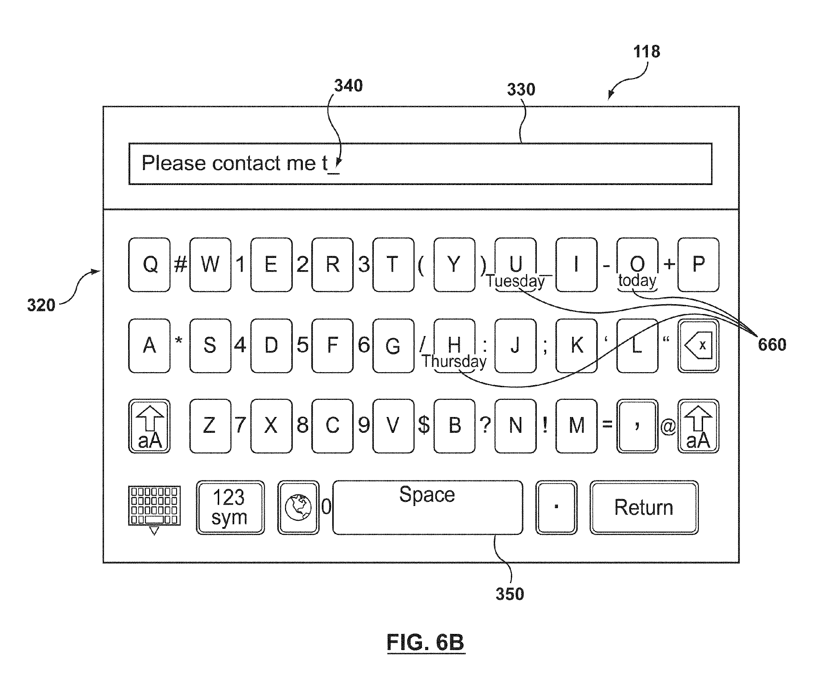

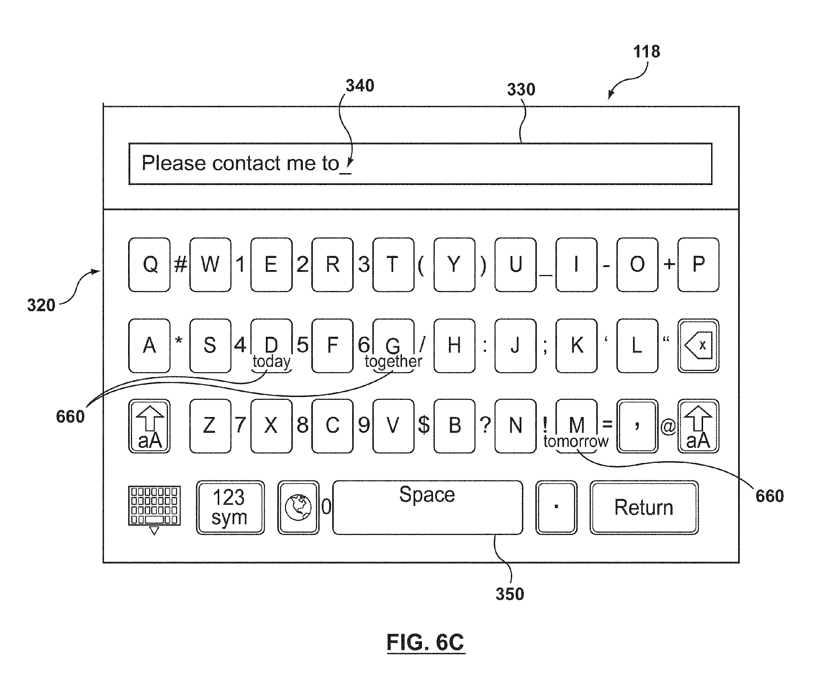

Fig. 6B shows an example where touch-sensitive display 118 has received the "T" character as input after the user has pressed the "T" key. In this scenario, touch-sensitive display 118 displays a "t" in input field 330. Generated set of characters 660 (for example, "Tuesday," "today," and "Thursday") are displayed at the keys of the subsequent candidate input characters. Fig. 6C shows an example where electronic device 100 has received the "o" character as input after the user presses the "O" key instead of inputting generated set of characters 660 "today" as was shown in Fig. 6B. Thus, "o" is now displayed in input field 330.

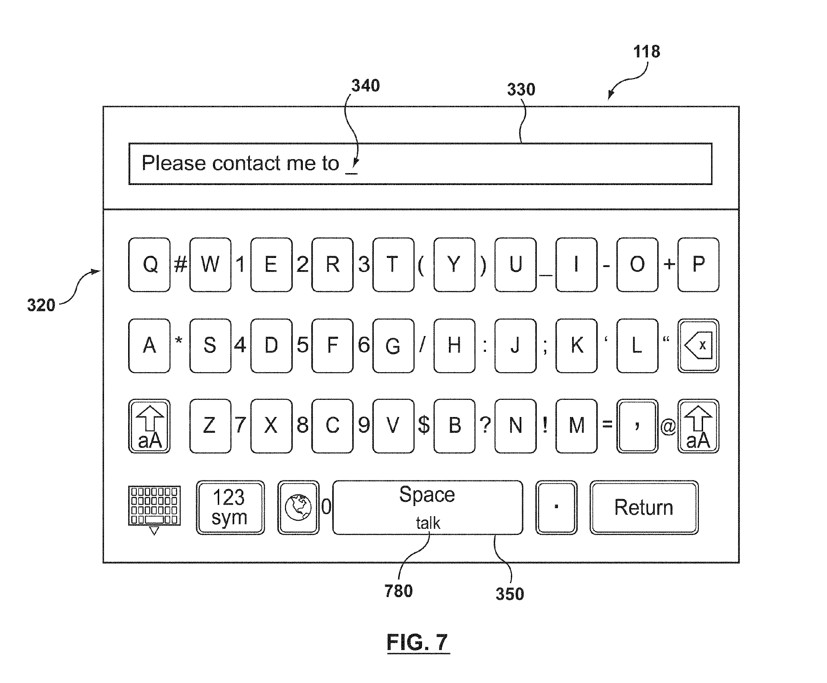

Fig. 7 shows an example where touch-sensitive display 118 has received the <SPACE> character as input after the user selects the space key. In this scenario, touch-sensitive display 118 inserts a <SPACE> character, and then displays predicted set of characters "talk" 780 at space key 350.

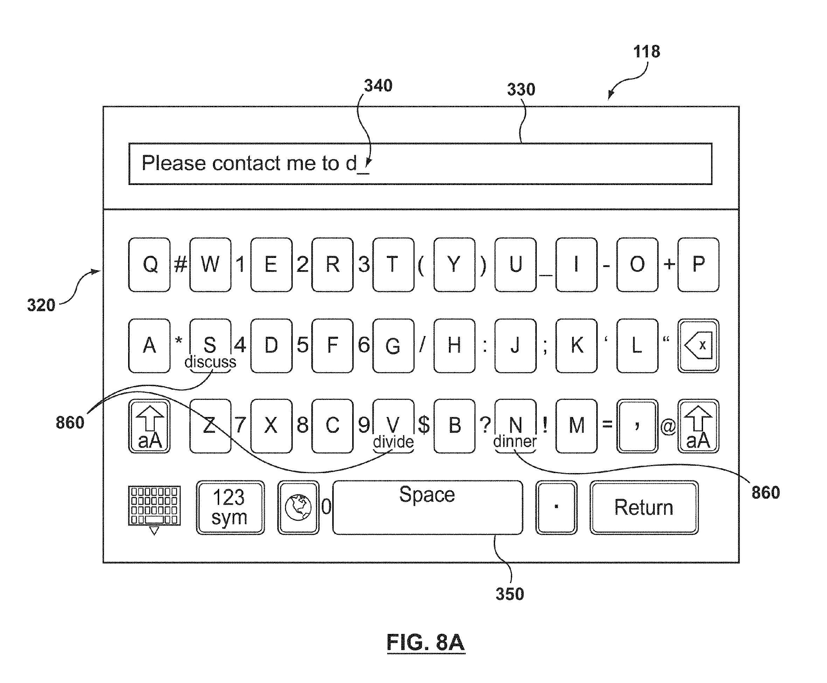

Fig. 8A shows an example where touch-sensitive display 118 has received the "d" character as input after the user presses the "D" key. In this scenario, touch-sensitive display 118 displays a "d" in the input field 330 and displays generated set of characters "discuss," "divide," and "dinner" 860 on keys corresponding to subsequent candidate input characters. In this example embodiment, while the character "I" was never received as input, electronic device 100 determined that generated set of characters "discuss," "divide," and "dinner" 860 were the set of characters to be displayed on touch-sensitive display. In this embodiment, because each of these set of characters has "i" as its second letter, touch-sensitive display 118 displayed generated set of characters using a further subsequent letter in the set of characters (for example, "discuss" under the "S" key, "divide" under the "V" key, and "dinner" under the "N" key). In other embodiments, generated set of characters "discuss," "divide," and "dinner" 860 can be displayed at or near the "I" key.

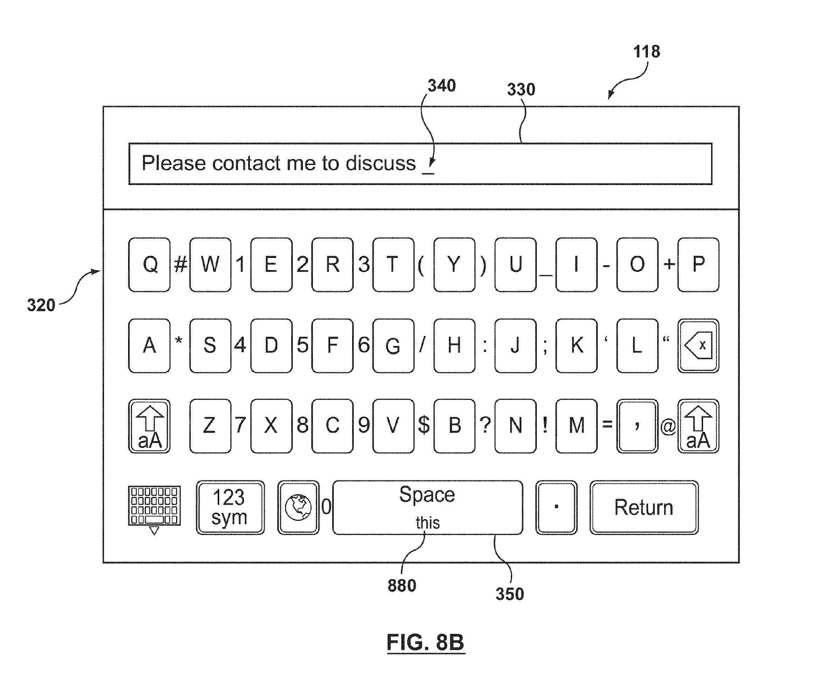

Fig. 8B shows an example where touch-sensitive display 118 has received the set of characters "discuss" as input after the user chooses generated set of characters "discuss" 860. In this example, touch-sensitive display 118 displays predicted set of characters "this" 880 at space key 350.

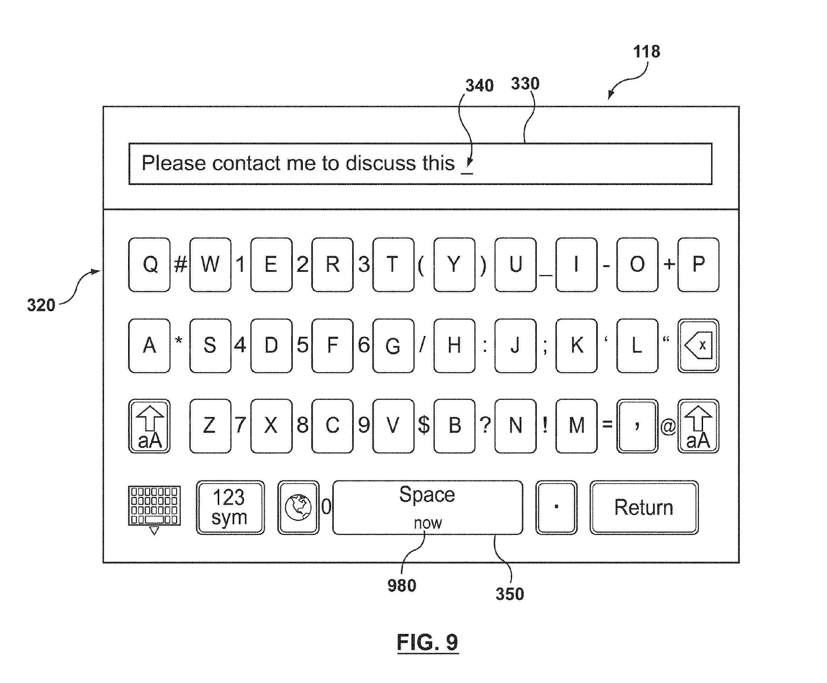

Fig. 9 shows an example where touch-sensitive display 118 receives the "this" set of characters as input after user selects "this" as a desired predicted set of characters 880. In this example, touch-sensitive display 118 displays predicted set of characters "now" 980 at space key 350.

Touch-sensitive display 118 can also receive punctuation as input at any time during the typing of a message. If a user decides to use punctuation after inputting either a generated set of characters or a predicted set of characters, the <SPACE> character (for example, the <SPACE> character prior to cursor 940 of Fig. 9) is deleted and the inputted punctuation is inserted.

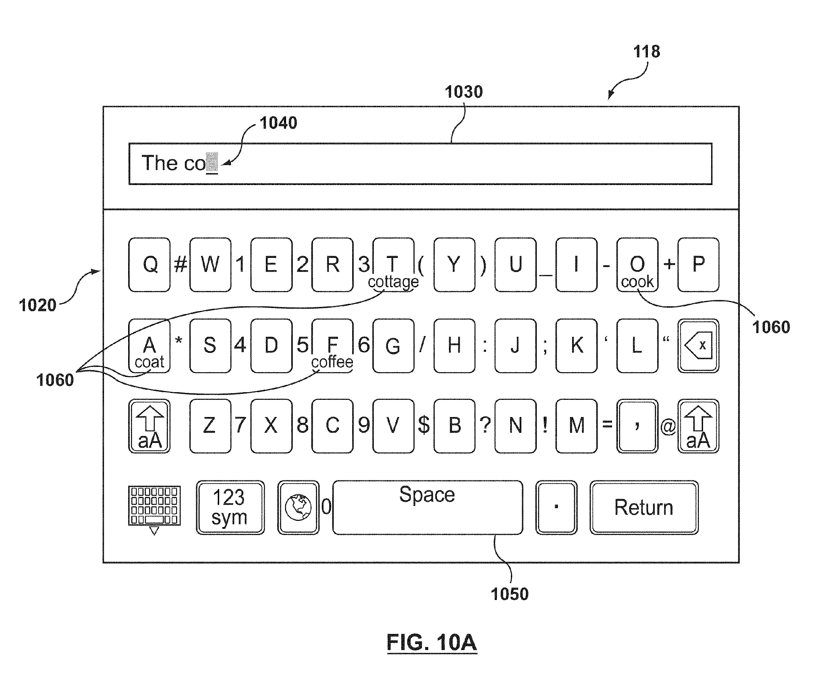

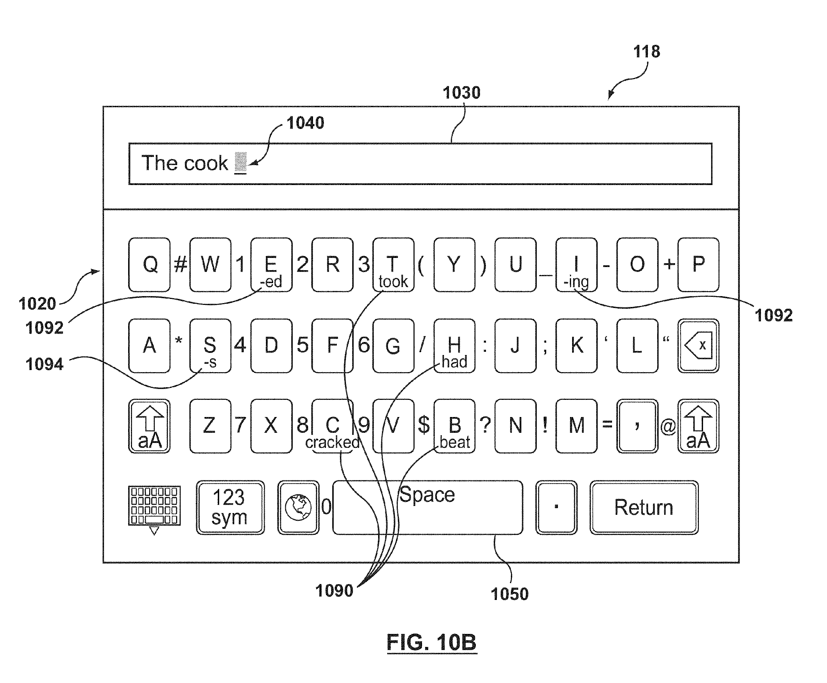

Figs. 10A and 10B show example front views of a touch-sensitive display, consistent with embodiments disclosed herein. Fig. 10A shows an example where touch-sensitive display 118 displays "The co" in a text bar 1030 and several generated set of characters 1060 are displayed at subsequent candidate input characters. In this example, touch-sensitive display 118 displays generated set of characters "cottage" 1060 under the "T" key, generated set of characters "cook" 1060 under the "O" key, generated set of characters "coat" 1060 under the "A" key, and generated set of characters "coffee" 1060 under the "F" key.

Fig. 10B shows an example where touch-sensitive display 118 receives the set of characters "cook" as input after the user has selected the generated set of characters 1060 "cook." The set of characters "cook" is inserted into input field 1030 along with a <SPACE> character. In this example, set of characters include new predicted set of characters (such as words 1090, affixes 1092 (for example, "-ed" under the "E" key and "-ing" under the "I" key), and plurals 1094 (for example, "-s" under the "S" key)), all of which are displayed at subsequent candidate input characters. Each predicted word 1090, affix 1092, or plural 1094 is located on respective subsequent candidate input characters that match the first letter of the predicted word 1090, affix 1092, or plural 1094. Now the user has the added option of inputting a predicted set of characters 1090, 1092, and 1094. Input is made in the same manner as described above. In some embodiments, when touch-sensitive display 118 receives either affix 1092 or plural 1094 as an input, the <SPACE> character between cursor 1040 and "cook" is deleted and the corresponding inputted affix or plural is added to the end of "cook."

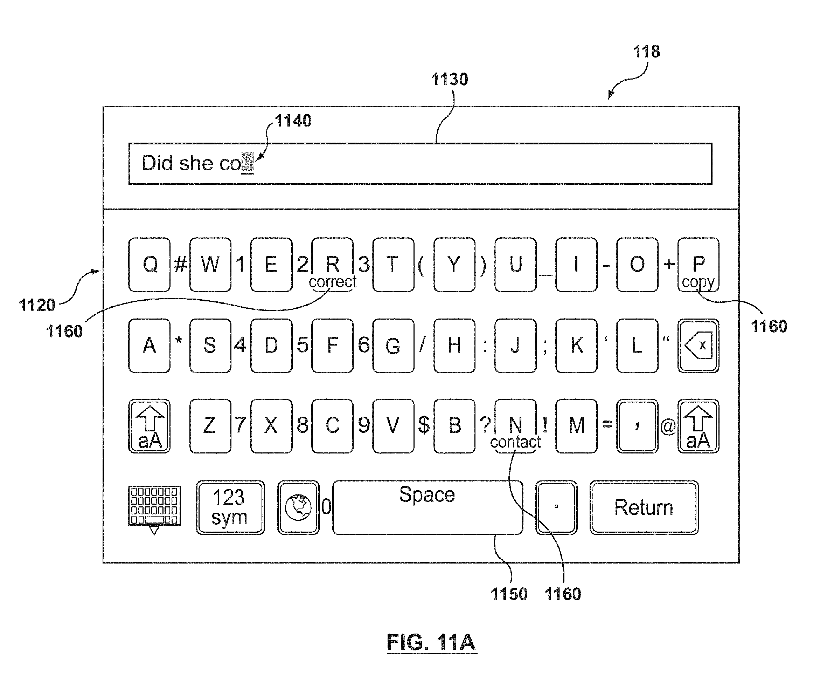

Fig. 11A shows an example where touch-sensitive display 118 displays "Did she co" in a text bar 1130 and several generated set of characters 1160 are displayed at subsequent candidate input characters. In this example, touch-sensitive display 118 displays generated set of characters "correct" 1160 under the "R" key, generated set of characters "copy" 1160 under the "P" key, and generated set of characters "contact" 1160 under the "N" key. While "co" is provided in the text bars of both Fig. 10A and Fig. 11A, touch-sensitive display displays different generated set of characters based on the context of the characters in their respective text bars 1030 and 1130. For example, in Fig. 10A, the characters "co" follows "The," which implies that a noun beginning with "co" should follow. In Fig. 11A, the characters "co" follow a pronoun, which implies that a verb beginning with "co" should follow. As stated above, contextual data can be used to determine when certain set of characters are more appropriate based on, for example, the set of characters in a text bar or previous actions by a user.

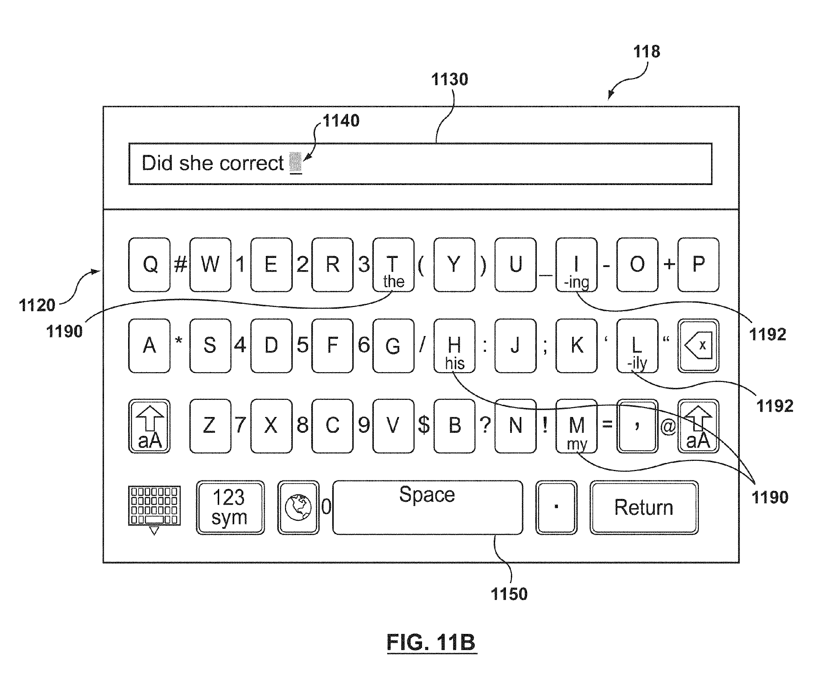

Fig. 11B shows an example where touch-sensitive display 118 receives the set of characters "correct" as input after the user has selected the generated set of characters "correct" 1160. In this example, the set of characters "correct" is inserted in input field 1130 and a <SPACE> character is also inserted. Predicted set of characters (such as words 1190 and affixes 1192) are now displayed at subsequent candidate input characters. In this example, while affixes "-ing" and "-ily" both correspond to the "I" key, touch-sensitive display 118 displays "-ing" with the "I" key and "-ily" with the "L" key. As stated above, the predicted affix may be assigned to a certain key based on a ranking, on contextual data, or a combination of both. In this embodiment, the "-ing" affix may have had a higher ranking than the "-ily" affix and was thus assigned to the "I" key. Accordingly, the "-ily" affix was assigned to the "L" key based on the corresponding "L" character being in the "-ily" affix.

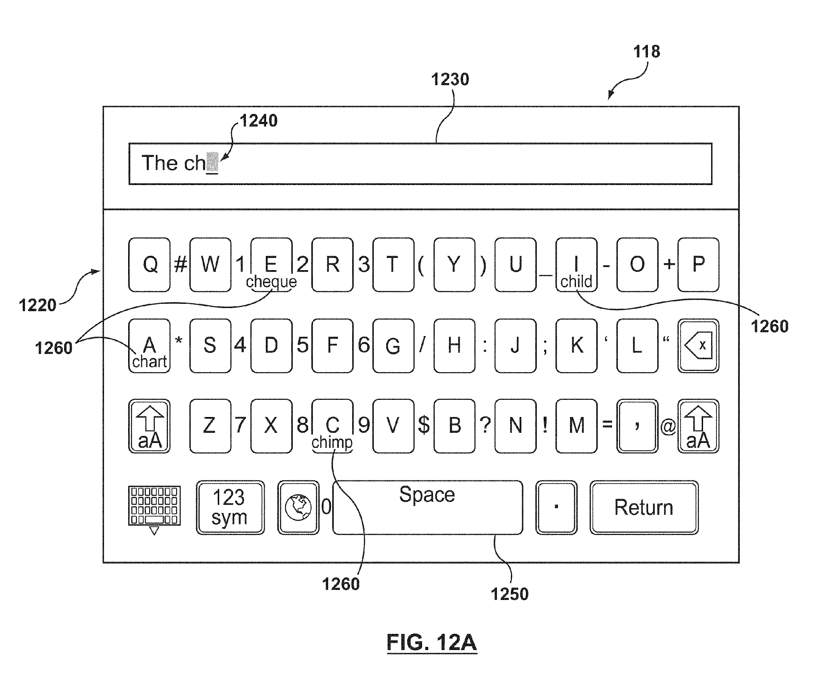

Fig. 12A shows an example where touch-sensitive display 118 displays "The ch" in a text bar 1230 and several generated set of characters 1260 are displayed at subsequent candidate input characters. In this example, generated set of characters 1260 include both "child" and "chimp." In this embodiment, while the third letter in both "child" and "chimp" are the same, touch-sensitive display displays "child" under the "I" key and displays "chimp" under the "C" key. The determination on which generated set of characters goes under which candidate input key can be based on a ranking (as specified above). As illustrated in this embodiment, touch-sensitive display 118 can display a generated set of characters (in this case, "chimp") on a key even though that key may not be associated with any subsequent characters of the characters in text bar 1230.

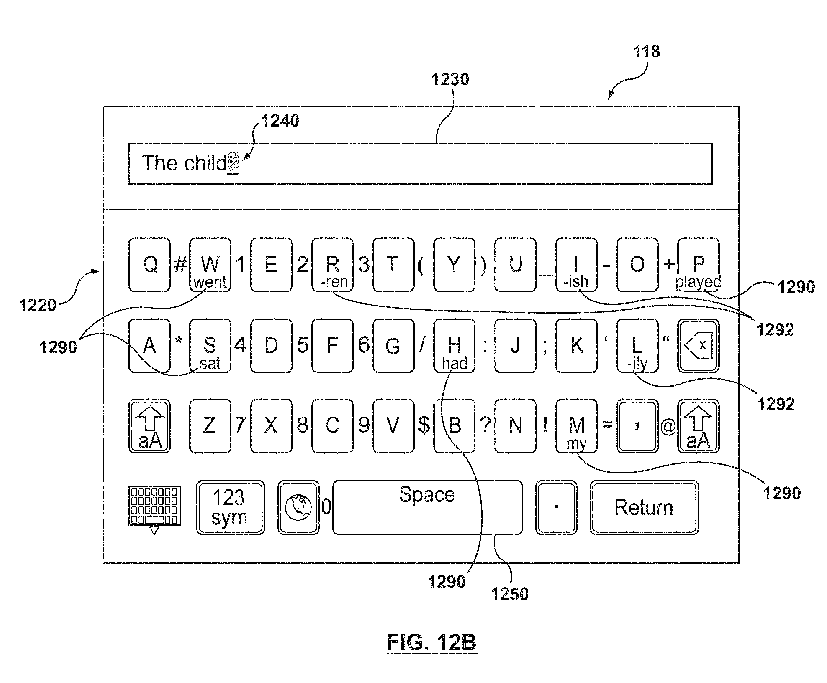

Fig. 12B shows an example where touch-sensitive display 118 receives the set of characters "child" as input after the user has selected the generated set of characters "child" 1260. The set of characters "child" is inserted in input field 1230 and, in this example, a <SPACE> character is not inserted. Predicted set of characters (such as words 1290 and affixes 1292) are now displayed at subsequent candidate input characters. In this example, while affixes "-ish" and "-ily°° both correspond to the "I" key, touch-sensitive display 118 displays "-ish" with the "I" key and "-ily" with the "L" key. As stated above, the predicted affix may be assigned to a certain key based on a ranking, on conventional data, or a combination of both. In this embodiment, the "-ish" affix may have had a higher ranking than the "-ily" affix and was thus assigned to the "I" key. Accordingly, the "-ily" affix was assigned to the "L" key based on the corresponding "L" character being in the "-ily" affix.

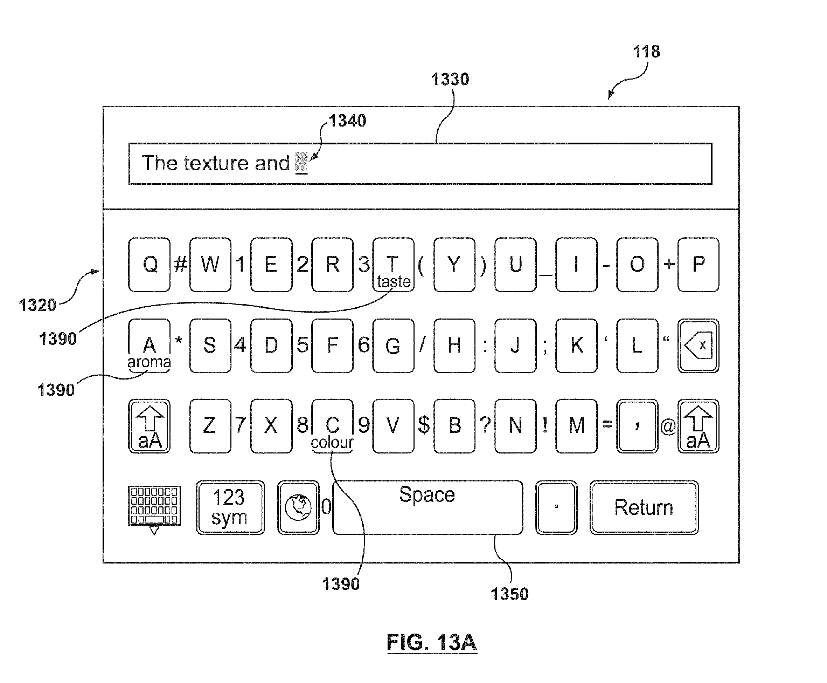

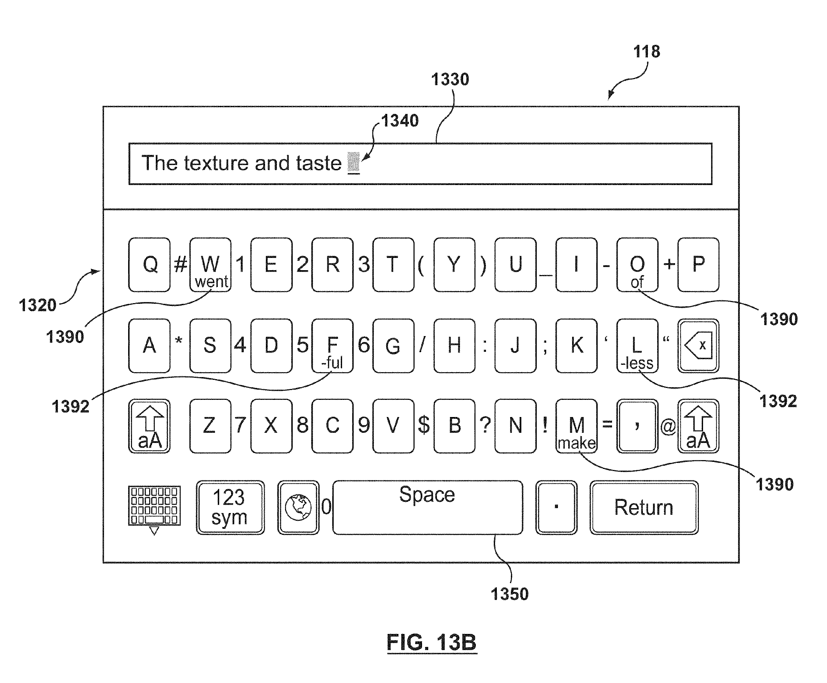

Fig. 13A shows an example where touch-sensitive display 118 displays "The texture and" in a text bar 1330 and several predicted set of characters (for example, words 1390) are displayed at subsequent candidate input characters. Fig. 13B shows an example where touch-sensitive display 118 received the set of characters "taste" as input after the user had selected the predicted set of characters "taste." In this example, a <SPACE> character was inserted after "taste." Consequently, predicted set of characters (such as, words 1390 and affixes 1392) are displayed at subsequent candidate input characters.

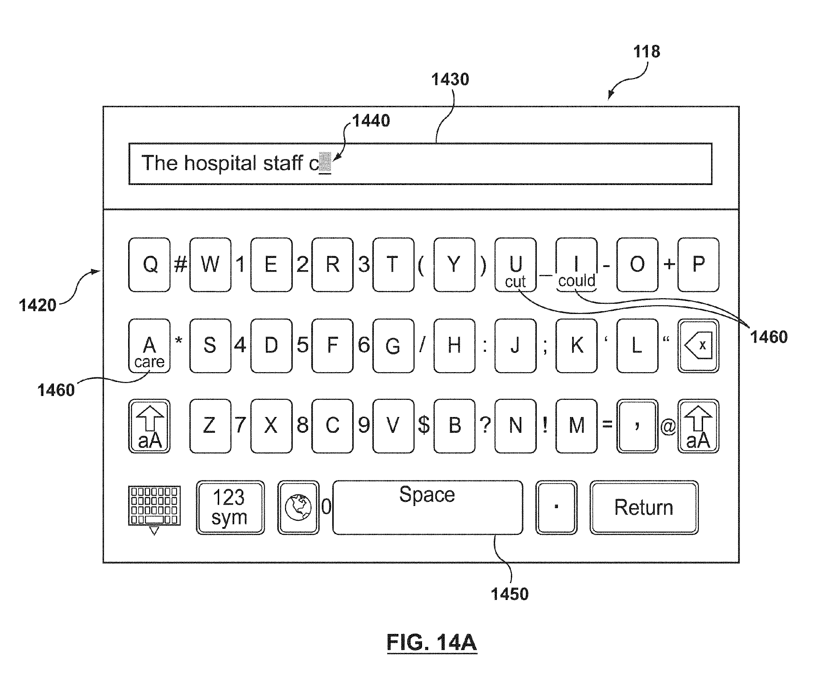

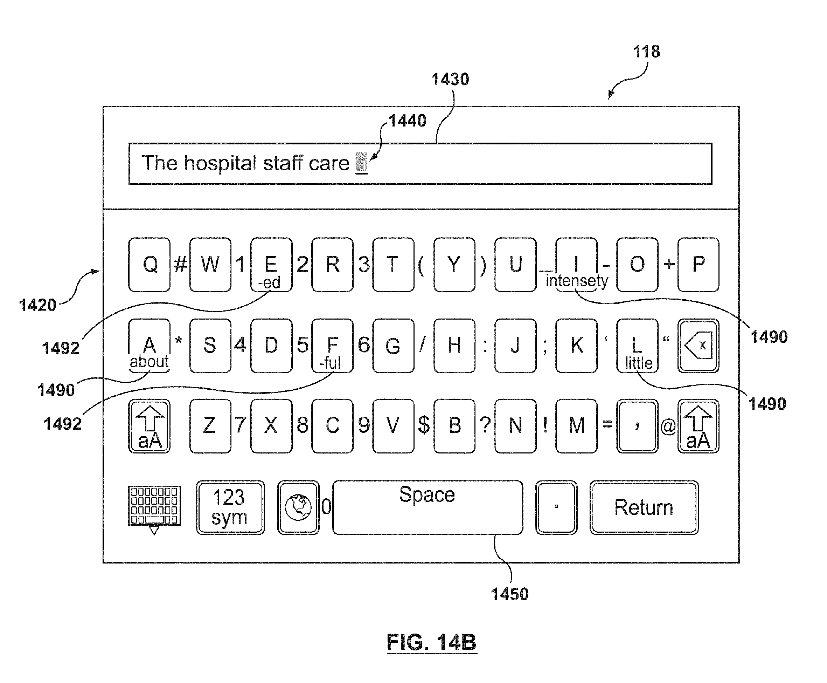

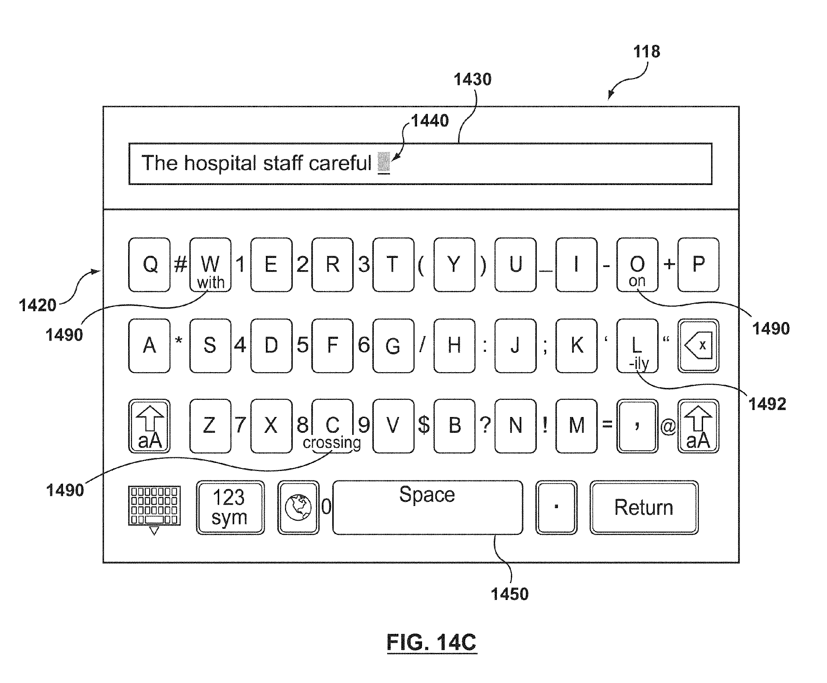

Fig. 14A shows an example where touch-sensitive display 118 displays "The hospital staff c" in a text bar 1430 and several generated set of characters 1460 are displayed at subsequent candidate input characters. Fig. 14B shows an example where touch-sensitive display 118 received the set of characters "care" as input after the user had chosen the generated set of characters "care." Generated set of characters "care" is now placed in input field 1430 along with a <SPACE> and predicted set of characters (such as, words 1490 and affixes 1492) are displayed at subsequent candidate input characters. Fig. 14C shows an example where touch-sensitive display 118 received the affix "-ful" as input (thereby modifying the set of characters "care" to "careful") after the user had chosen the predicted affix "-ful." Thus, the set of characters "careful" is now inserted into input field 1430. Note, in some embodiments, inputting a word or affix can modify the input word or word fragment. For example, if "spicy" was input by a user, and "ness" is a predicted affix and is inputted, "spicy" would change to "spiciness," dropping the "y" and adding "iness". In other embodiments, "happy" could change to "happiness" or "conceive" could change to "conceivable".

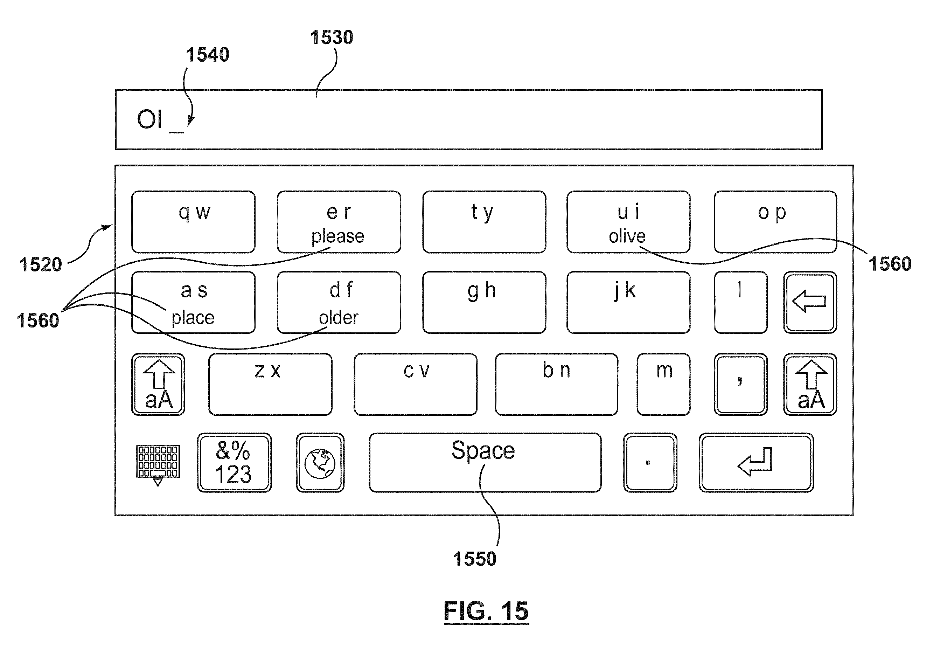

Fig. 15 shows an example of an ambiguous keyboard 1520, which can have multiple characters assigned to a key (for example, such as a telephone keypad where "A", "B" and "C" are assigned to key 2; "D", "E" and "F" are assigned to key 3, and so on). For example, the characters "Q" and "W" can be assigned one key, and the characters "E" and "R" assigned to another key. In this example, the user has input the characters "Ol" by pressing the "op" key followed by the "L" key. Using a predictor, generated set of characters 1560 are displayed at subsequent candidate input characters. Since the first pressed key can input either an "O" or a "P" and the second pressed key inputs an "L", generated set of characters 1560 will begin with "OL" or "PL", such as shown by generated set of characters 1560 in Fig. 15.

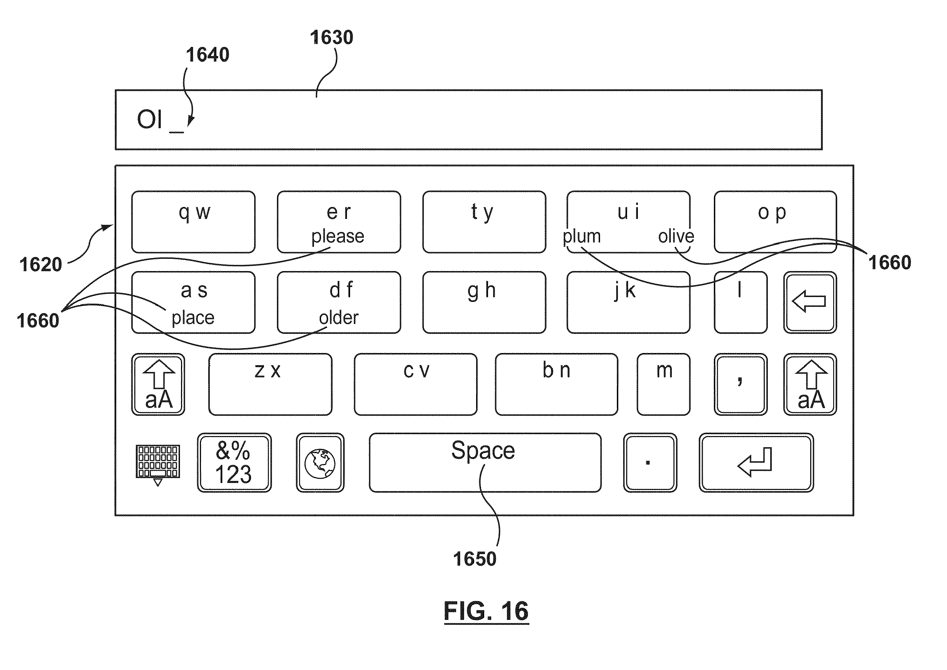

Fig. 16 shows another example of an ambiguous keyboard 1620. In this example, generated sets of characters "plum" and "olive" 1660 are displayed near the "ui" key. The sets of characters could also have been displayed at or on the "ui" key. Here, both sets of characters correspond to a particular input corresponding to a key, namely the third letter of plum is a "u" and the third letter of olive is an "i." Touch-sensitive display 118 (via main processor 102) can differentiate between the input of either set of characters based on the user's action. For example, the user can swipe at or near the right of the "ui" key to input "olive", or swipe at or near the left of the "ui" key to input "plum".

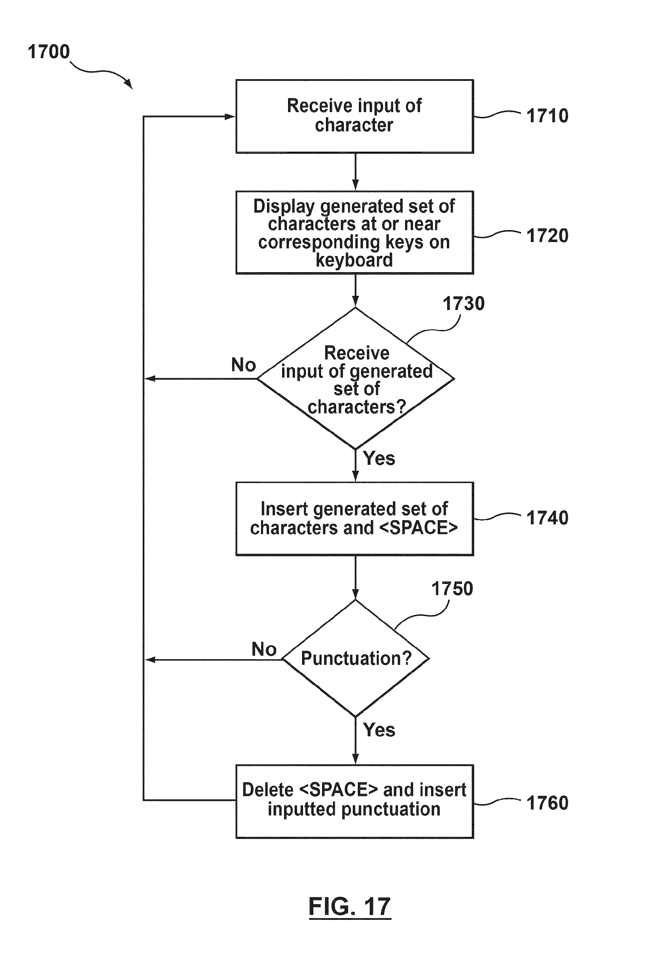

The examples and embodiments illustrated in Figs. 17, 18, and 19 can be implemented with any set of characters such as words, phrases, acronyms, names, slang, colloquialisms, abbreviations, or any combination thereof.

Fig. 17 shows in flowchart form a method 1700 in accordance with some embodiments. Method 1700 can be implemented with a processor, such as main processor 102, and stored on a tangible computer readable medium, such as hard drives, CDs, DVDs, flash memory, and the like. At block 1710, the processor receives an input of a character. At block 1720, the processor displays a generated set of characters at or near keys of subsequent candidate input characters on the touch-sensitive display, such as described above.

At block 1730, the processor receives an input of the generated set of characters chosen by a user. If the user does not choose a generated set of characters displayed at or near keys of subsequent candidate input characters, the method restarts at block 1710, where the touch-sensitive display can receive an input of another character. If a generated set of characters is received as input, at block 1740 the generated set of characters and a <SPACE> character is inserted in an input field (for example, input field 330 of Figs. 3-9). As mentioned previously, the user can choose the generated set of characters, for example, by swiping at or near it or by long pressing a key corresponding to the subsequent candidate input character.

Continuing at block 1750, if the processor detects that punctuation is not to be inserted, the method restarts at block 1710. If punctuation is to be inserted, the method continues to block 1760 where the <SPACE> character is deleted and the appropriate punctuation is added to the input field. After block 1760, the method starts over at block 1710.

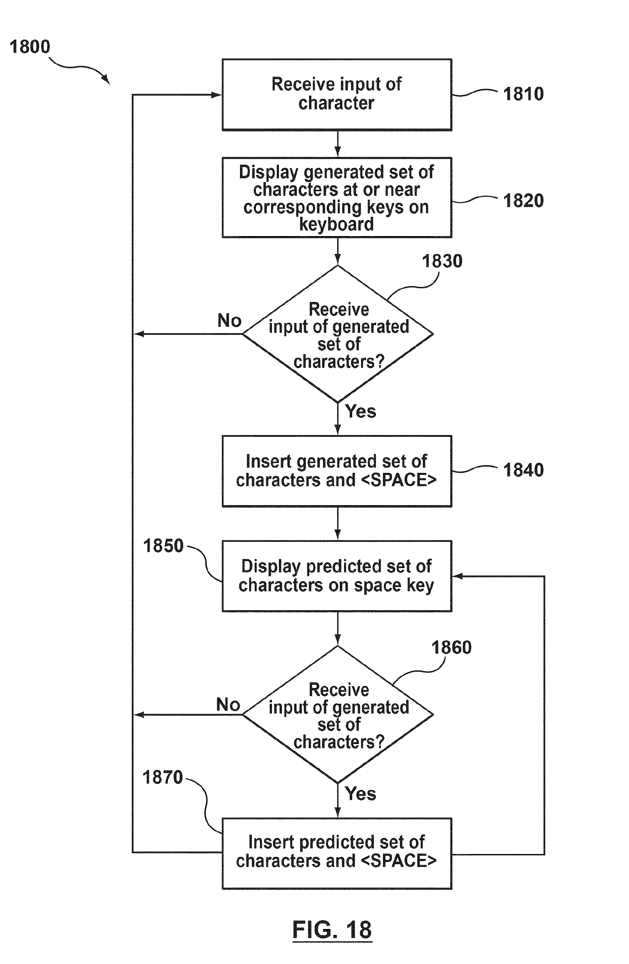

Fig. 18 is a flowchart illustrating example method 1800 in accordance with some embodiments. Method 1800 can be implemented with a processor, such as main processor 102, and stored on a tangible computer readable medium, such as hard drives, CDs, DVDs, flash memory, and the like. At block 1810, the processor receives an input of a character.

At block 1820, the processor displays a generated set of characters at or near a location on the keyboard corresponding to a subsequent candidate input character on a touch-sensitive display. At block 1830, the processor receives an input of a generated set of characters chosen by a user. If the user does not choose a generated set of characters displayed at or near keys of subsequent candidate input characters, the method restarts at block 1810, where the processor can receive an input of another character. If a generated set of characters is received as input, at block 1840 the generated set of characters and a <SPACE> character is inserted in an input field (for example, input field 330 of Figs. 3-9). As mentioned previously, the user can choose the generated set of characters, for example, by swiping at or near it or by pressing a key corresponding to the subsequent candidate input character for a predetermined period of time.

At block 1850, a predicted set of characters, different from the generated set(s) of characters, is displayed on a space key of the keyboard after the input of the generated set of characters in block 1830. The predicted set of characters displayed in block 1850 is determined by using a predictor. In some embodiments, the one or more predicted sets of characters can be placed on one or more keys other than the space key.

At block 1860, the processor can determine whether it has received an input of the predicted set of characters based on a user input. If the touch-sensitive display has not received an input of the predicted set of characters because the user has not chosen the predicted set of characters, the method restarts at block 1810. If the processor has received the input of the predicted set of characters, the method continues to block 1870, where the chosen predicted set of characters and a <SPACE> character is inserted in the input field. From here, method 1800 can return to either block 1810 or block 1850.

Even though method 1800 does not display the punctuation illustration as shown in method 1700, the punctuation illustration, as shown in blocks 1750 and 1760, can likewise be applied to method 1800.

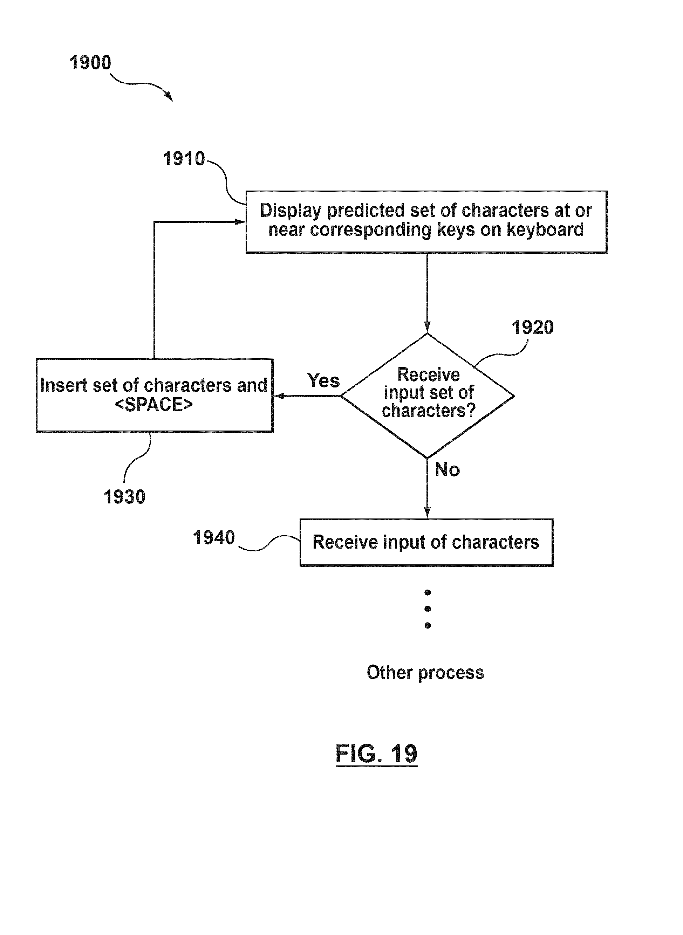

Fig. 19 is a flowchart illustrating an example method 1900 in accordance with some embodiments. At box 1910, predicted set of characters is displayed at corresponding subsequent candidate input characters. In these embodiments, an input has not been received or a delimiter has been activated, such as inputting a <SPACE>. Here, one or more predicted set of characters (such as, words, affixes, or a combination thereof) are placed on subsequent candidate input characters that correspond to the first letter of the generated set of characters. Moving to box 1920, it is determined whether the touch-sensitive display receives an input of the set of characters (such as, word or affix) based on a user's selection. If an input is received, the method moves to block 1930 where the predicted set of characters and a <SPACE> character are inserted into an input field. Then the method starts over at block 1910. If the touch-sensitive display does not receive an input of the set of characters, the touch-sensitive display is available to receive an input of a character (as described by block 1710 of Fig. 17 or block 1810 of Fig. 18) and proceed through methods (such as methods 1700 of Fig. 17 or 1800 of Fig. 18 or even method 1900 of Fig. 19).

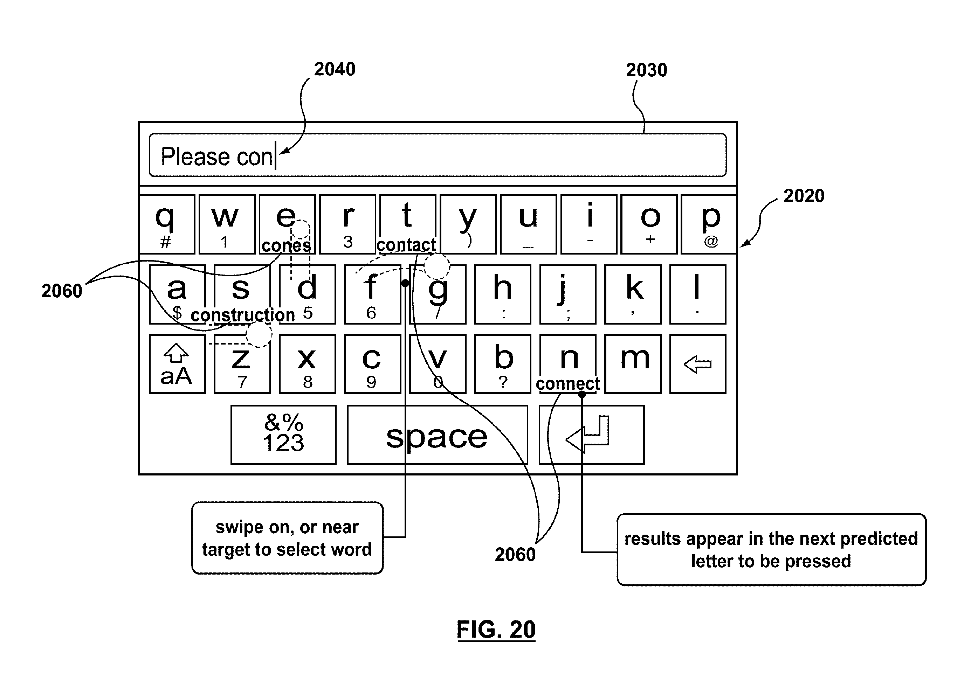

Fig. 20 shows another example of a virtual keyboard 2020 having an input field 2030. The set of characters "Please con" are received as input by the touch-sensitive display and displayed in the input field 2030 followed by a cursor 2040, which can be a vertical line (as shown) or any other shape, such as an underscore as mentioned previously. A predictor determines one or more generated set of characters 2060 based in part on the received input for the current position of cursor 2040 within the current word, which is in the fourth character position of the current word, as shown in input field 2030. The current word is the word in which the cursor is currently located. In the shown example, generated set of characters 2060 "cones", "contact", "construction" and "connect" are displayed. Each generated set of characters 2060 is displayed at a key corresponding to a subsequent candidate input character (for example, under the E, T, S and N keys of the virtual keyboard 2020, respectively), for the current position of cursor 2040, which is in the third character position, as shown in input field 2030.

In the shown example, each generated set of characters 2060 is displayed at or near keys on the virtual keyboard 2020 associated with the subsequent candidate input characters. The display of a generated set of characters 2060 at or near a key corresponding to a subsequent candidate input character depends, for instance, on the size of the generated set of characters 2060 and the size of generated set of characters associated with nearby keys of other subsequent candidate input characters. When the generated set of characters associated with nearby keys in the same row of keys in the virtual keyboard 2020 are too large to be displayed at the same time without overlapping with each other or without a predetermined distance between the generated sets of characters, the processor 102 limits the generated set of characters which are displayed. The processor 102 may limit the generated set of characters which are displayed using one or any combination of the rank of each generated set of characters, the size of each generated set of characters, and a distance between each generated set of characters which are displayed so that a predetermined distance between the generated set of characters is maintained. This may result in the display of one or more generated sets of characters which are larger than the associated key in the virtual keyboard 2020.

In some examples, if two generated sets of characters are both ranked high, and these sets of characters would otherwise be displayed at nearby keys but cannot be displayed and still maintain a predetermined distance between the generated sets of characters at the display text size, the electronic device could be configured to display only the highest ranked generated set of characters. This results in the display of the most likely generated set of characters. In other examples, only the longest of the generated set of characters is displayed. This may be beneficial in that allowing faster entry of longer words saves time and processing cycles, thereby leveraging the predictive text input solution. In yet other examples, only the shortest generated set of characters is displayed. This may be beneficial in that shorter words can be more common, at least for some users, thereby allowing faster entry of words which saves time and processing cycles, thereby leveraging the predictive text input solution.

In some examples, the processor 102 may only limit the generated set of characters which are displayed in neighboring/adjacent keys in the same row of keys in the virtual keyboard 2020. In some examples, the processor 102 may limit the generated set of characters which are displayed in neighboring/adjacent keys in the same row of keys in the virtual keyboard 2020 so that a generated set of characters is never displayed in neighboring/adjacent keys irrespective of the size of the generated set of characters or distance between each generated set of characters. In such examples, the processor 102 uses the rank to determine which generated set of characters are displayed.

In other examples, the processor 102 can limit the generated set of characters which are displayed when the generated set of characters associated with nearby keys in different rows of keys in the virtual keyboard 2020 are too large to be displayed at the same time without overlapping with each other or without a predetermined distance between the generated sets of characters. In other examples, the processor 102 can limit the generated set of characters which are displayed when the generated set of characters associated with nearby keys in the same or different columns of keys in the virtual keyboard 2020 are too large to be displayed at the same time without overlapping with each other or without a predetermined distance between the generated sets of characters

As mentioned previously, a user can use a finger or stylus to swipe a generated set of characters to input that generated set of characters. An individual letter, in contrast, can be input by tapping a respective key in the virtual keyboard 2020 using a finger or stylus. The touch-sensitive display differentiates between tap and swipe events using movement and duration of touch events, the details of which are known in the art and need not be described herein. Each key in the virtual keyboard 2020 and each generated set of characters 2060 which is displayed has an associated target area on the touch-sensitive display. The target area associated with each generated set of characters can be larger than and/or overlap with the target area of the key corresponding to the subsequent candidate input character with which it is associated and possibly nearby keys, such as neighboring keys in the same row. A user need only swipe on or nearby a displayed generated set of characters to input the generated set of characters. This permits faster input of a generated set of characters by creating larger and more accessible target areas, thereby saving time and processing cycles. In some examples, a generated set of characters can be input by detecting a swipe in any direction at or near the displayed generated set of characters. In other examples, a generated set of characters can only be input by detecting a swipe in a particular direction at or near the displayed generated set of characters. The particular direction may be associated with a direction in which the particular direction displayed generated set of characters (e.g., left or right in the shown example). In some examples, the swipe is at or near the displayed generated set of characters when the swipe has an initial contact point within the target area associated with the displayed generated set of characters (which may be the same or larger than the displayed generated set of characters).

### User interface for Changing an Input State of a Virtual Keyboard

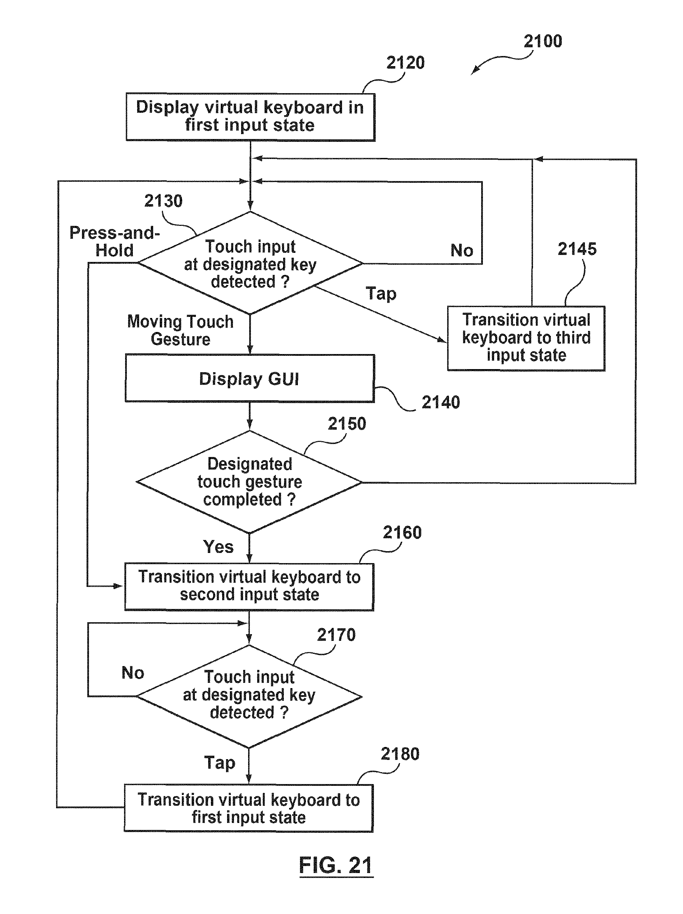

Fig. 21 is a flowchart of a method 2100 for changing an input state of a virtual keyboard rendered and displayed on a display of an electronic device 100 in accordance with one example embodiment of the present disclosure. The virtual keyboard has at least two input states but could have more than two input states. The method 2100 may be carried out, at least in part, by firmware or software executed by the processor 102. Coding of software for carrying out such a method 2100 is within the scope of a person of ordinary skill in the art provided the present disclosure. The method 2100 may contain additional or fewer processes than shown and/or described, and may be performed in a different order. Computer-readable code executable by the processor 102 to perform the method 2100 may be stored in a computer-readable medium such as the memory 110.

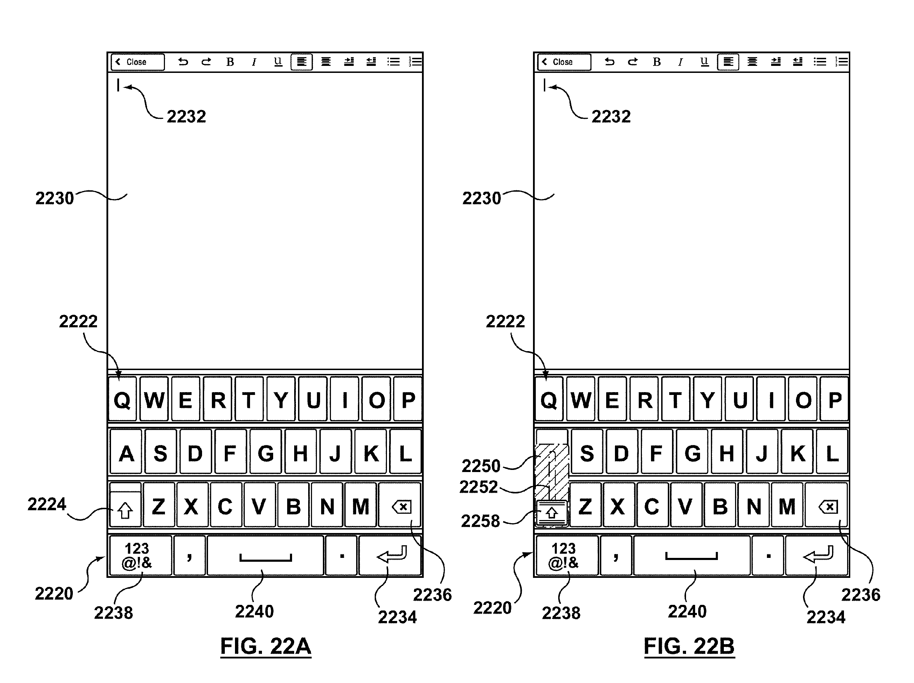

At 2120, a virtual keyboard is rendered and displayed on the touch-sensitive display 118 in a first input state. The virtual keyboard includes a first input character set when the virtual keyboard is in the first input state. Fig. 22A shows an example of a user interface screen having a virtual keyboard 2220 including a plurality of character keys 2222 when the virtual keyboard 2220 is in the first input state. Each key in the plurality of character keys 2222 corresponds to a character in the first input character set when the virtual keyboard 2220 is in the first input state. The plurality of character keys are arranged in a familiar QWERTY layout in the shown example but may be arranged in another suitable format in other examples. In the shown example, the characters keys 2222 of the first input character set include alphabetic characters, the comma character, the space character and the period character. The alphabetic characters of the first input character set in the shown example are English characters. The virtual keyboard 2220, in the shown example, is displayed below an input field 2230 including a cursor 2232, as mentioned previously. The virtual keyboard 2220 also includes non-character keys such as a "Shift" key 2224, a "Backspace" key 2234, an "Enter" key 2236 and a "Symbol" key 2238 with the label "123@!&" in the shown example. The "Symbol" key 2238 invokes an alternative virtual keyboard having an alternative input character set which comprises number and/or symbols, as described more fully below.

The virtual keyboard 2220 inputs a character from the first input character set when the virtual keyboard 2220 is in the first input state in response to corresponding input associated with one of the character keys 2222. The input may be, for example, tapping a character key 2222.

The virtual keyboard 2220 may be displayed in the first input state by default when the virtual keyboard 2220 is called or invoked, for example, in response to corresponding input (such as activation of a keyboard button or icon) or the display of an input field, such as, for example, the input field 2230 shown in Fig. 22A. Alternatively, the virtual keyboard 2220 is displayed in the first input state in response to transitioning from another input state, such as those described below.

At block 2130, the electronic device 100 and/or touch-sensitive display 118 monitor for touch events, in particular designated touch gestures, at a designated key in the virtual keyboard 2220 for changing the input state of the virtual keyboard 2220. The electronic device 100 and/or touch-sensitive display 118 may also monitor for other touch gestures at the same time. In shown example of Figs. 22A to 22F, the designated key is the "Shift" key 2224. In other examples, the designated key is the "Symbol" key 2238. In yet other examples, the designated key may be either the "Shift" key 2224 or the "Symbol" key 2238.

At block 2140, a transition graphical user interface (GUI) element is rendered and displayed on the touch-sensitive display 118 when a moving touch gesture having a starting point at a location associated with, that is within or near, the designated key is detected on the touch-sensitive display 118. A moving touch gesture has a moving touch point (also known as centroid). The transition GUI provides a user interface for transitioning the virtual keyboard 2220 from the first input state to a second input state in response to detection of a first touch gesture. If the first touch gesture has not been completed when the touch event ends, the virtual keyboard 2220 remains in the first input state, such as that shown in Fig. 22A.

The transition GUI is provided by a GUI element which includes a gestural guide. The gestural guide is a visual indication of a gestural path for completing the first touch gesture. The gestural guide may take one of several forms. The GUI element, in at least some examples, is a pop-up or tooltip which at least partially overlays one or more of the character keys 2222 in the virtual keyboard 2220. The pop-up overlays a portion of the "A" key in the shown example; however, the pop-up may be a different size in other examples. For example, the pop-up may be larger and overlay more of the keys surrounding the designated key in other examples. For example, the pop-up may overlay all or part of the "Q" key, "W" key, "S" key, "Z" key, or any combination thereof, in addition to overlaying at least part of the "A" key in other examples. A larger pop-up increases the area created for interaction.

Fig. 22B shows an example of a pop-up transition GUI rendered and displayed in the user interface screen when the virtual keyboard 2220 in the first input state. The GUI element in the described example is a slider user interface element (commonly known as a "slider") and the first touch gesture is a drag or a swipe in a direction on the slider. The direction of the slider provides the gestural guide. As appreciated by persons skilled in the art, a drag is a moving gesture in which contact is substantially maintained during the motion of the gesture. The user's finger is lifted and the touch event ends when the motion has stopped or nearly stopped. By nearly stopped it is meant that the amount of motion is less than a threshold amount of motion. The threshold may be set to approximate no motion while accommodating some minor amount of motion to reduce false inputs. A swipe is a moving gesture in which contact is broken during the motion of the gesture. The user's finger is lifted and the touch event ends when the motion is still in progress. That is, the amount of motion is greater than or equal to the threshold amount of motion.

The slider includes a slider box 2250 including a slider bar 2252 which provides a directional reference for a slider button 2258 which is moveable along the slider bar 2252 between an initial position and a terminal position. In the shown example, the slider button 2258 is represented as the designated key (e.g., "Shift" key 2224) from the virtual keyboard 2220, thereby continuing the visual affordance provided by the GUI element. In the shown example, the slider button 2258 is somewhat smaller version of the designated key (e.g., "Shift" key) but could be the same size or larger than the designated key in the virtual keyboard 2220 in other examples. The slider button 2258 (e.g., designated key such as the "Shift" key) moves up and down along the slider bar 2252 in response to corresponding up and down movement of the touch gesture. The movement of the touch gesture is typically measured in terms of movement of a centroid of the touch event as understood to persons skilled in the art. In Fig. 22B, the slider button 2258 (e.g., designated key such as the "Shift" key) is located in the initial position which is the same as or proximate to a normal (or standard) position of the designated key (e.g., "Shift" key 2224) in the virtual keyboard 2220. In the shown embodiment, the GUI element is a vertical slider and the first touch gesture is an upward drag or swipe based on the initial position of the slider button 2258 (e.g., designated key such as the "Shift" key).

In some examples, after designated key (e.g., "Shift" key 2224), has been touched or pressed (i.e., after a touch down but before a touch lift-off), vertical changes of the touch point (e.g., changes in the y coordinate of the touch point) are considered; however, horizontal changes of the touch point (e.g., changes in the x coordinate of the touch point) are not considered. This allows the entire virtual keyboard 2220 to be provided as a surface of interaction in which only changes in the y coordinate are considered by the electronic device 100 and/or touchscreen 118 (and are mapped to the movement of the slider bar 2252). As a result, a user can touch or press the designated key (e.g., "Shift" key 2224) and then immediately drag a finger to the right (e.g., around the "F" key) and use up and down movements with that finger to move the slider button 2252, for example to the terminal position before releasing his or her finger. This allows users to get their finger "out of the way" when interacting with the slider, and there is no ambiguity in the touch gesture since it originated from the designated key (e.g., "Shift" key 2224). This provides relatively easy and efficient interaction.

The GUI element provides several functions. Firstly, the GUI element provides a visual cue for drawing the user's attention. The GUI element may be at least partially highlighted to provide a visual cue or hint which draws the user's attention towards the GUI element. The highlighting may comprise displaying the slider or other visual cue at least in part in a different color than the remainder of the virtual keyboard 2220. In some examples, the slider box 2250 is blue while the body of keys is black and the text within the keys is white. The GUI element effectively provides a tooltip for the designated key.

Secondly, the GUI element is larger than the keys in the virtual keyboard 2220, thereby providing an increased area for interaction and completing or performing the first touch gesture without dedicating space in the virtual keyboard 2220 to the GUI element and without enlarging the designated key (e.g., the "Shift" key 2224) relative to the character keys 2222 in the virtual keyboard 2220. This conserves space on the virtual keyboard 2220 and in some examples, may make room for additional character keys 2222, may reduce the number of rows in the virtual keyboard 2220 and/or may make room for larger keys.

Thirdly, the GUI element facilities the learning of the associated gesture for transitioning the virtual keyboard 2220 from the first input state to the second input state. As a user learns the associated gesture over time, the user may be able to perform the gesture quickly without considering the GUI element, thereby allowing faster and more intuitive interaction.

At block 2150, the electronic device 100 and/or touch-sensitive display 118 determines whether the first touch gesture is detected. In the described example, the first touch gesture is a drag or swipe as noted above. The first touch gesture has a minimum length (threshold) and a predefined direction along the slider bar 2252. In the shown example, the direction of the first touch gesture swipe is up. In other examples, the direction could be down, left, right, diagonal, etc. depending on the orientation of the slider and the initial position of the slider button 2258 within the slider. In the described embodiment, the length of the first touch gesture is at least the length of the slider bar 2252 but could be longer. The touch gesture has an initial contact point ("start") at a location associated with (within or near) the designated key (e.g., "Shift" key 2224) at the initial piston of the slider button 2258 and a final contact point ("end") at or above the location of the terminal position of the slider button 2258.

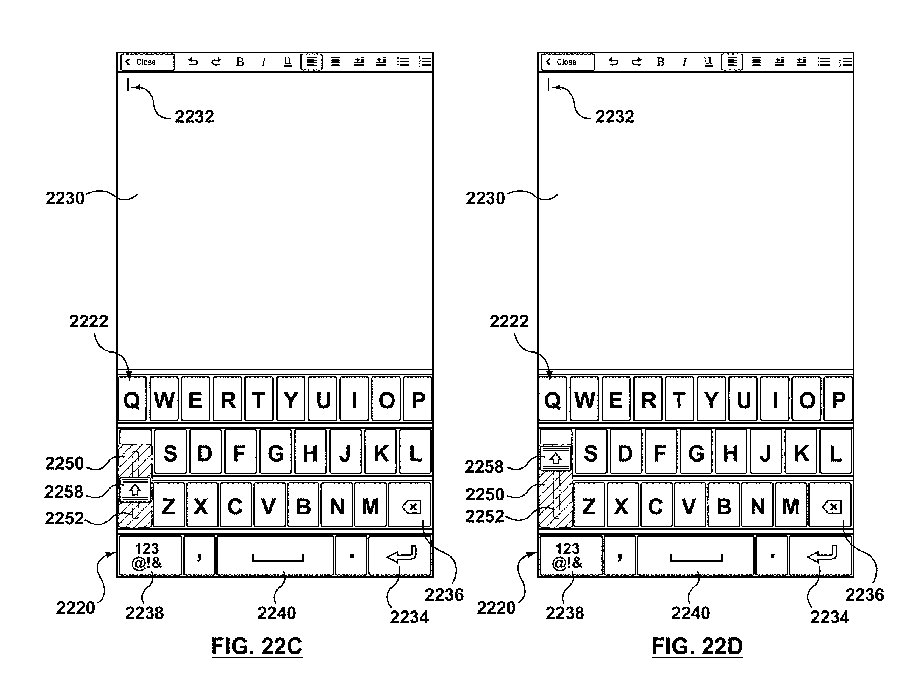

In Fig. 22C the slider button 2258 (e.g., designated key such as the "Shift" key) has moved upwards from its initial position of Fig. 22B. If the touch event were to end at this location, the first touch gesture will not have been completed and the virtual keyboard 2220 will remain in the first input state. In Fig. 22D, the slider button 2258 (e.g., designated key such as the "Shift" key) has moved further upwards from its position of Fig. 22C and is now located at the terminal position. If the touch event were to end at this location, the first touch gesture will have been completed and the virtual keyboard 2220 will transition to the second input state. The touch gesture can move further upwards above the location of the terminal position of the slider button 2258, however, the slider button 2258 (e.g., designated key such as the "Shift" key) will not move further upwards beyond the terminal position. In some examples, the electronic device 100 and/or touch-sensitive display 118 will still detect that the first touch gesture has been completed when the touch gesture moves further upwards above the location of the terminal position of the slider button 2258, and the virtual keyboard 2220 will transition to the second input state.

At block 2160, the electronic device 100 transitions the virtual keyboard 2220 from the first input state to the second input state when the first touch gesture is detected and the virtual keyboard 2220 is in the first input state. The virtual keyboard 2220 includes a second input character set when the virtual keyboard 2220 is in the second input state. Each key in the plurality of character keys 2222 corresponds to a character in the second input character set when the virtual keyboard 2220 is in the second input state. The virtual keyboard 2220 remains in the second input state until further input to transition the virtual keyboard 2220 from the second input state to the first input state is detected. When the first touch gesture is not detected when the touch event ends, the virtual keyboard 2220 remains in the first input state, such as that shown in Fig. 22A.

Transitioning the virtual keyboard 2220 to the second input state includes changing the inputs associated with each key from first input character set to the second input character set. Once transitioned to the second input state, activating (e.g., tapping) a key will register the associated character or function for the respective key in the second input character set. In the shown example, only the alphabetic character keys differ between the first input character set and the second input character set. The non-character keys in the second input character set are the same as in the first input character set. In other examples, every key in the second input character set is associated with a different character or function than the first input character set.

The virtual keyboard 2220 inputs a character from the second input character set when the virtual keyboard 2220 is in the second input state in response to corresponding input associated with one of the character keys 2222. The input may be, for example, tapping a character key 2222.

In the shown example, the characters displayed in the virtual keyboard 2220 do not change when the virtual keyboard 2220 is transitioned to the second input state even though the character keys 2222 in the virtual keyboard 2220 are associated with the second input character set rather than the first input character set. This may be advantageous in some examples, such as when the first input character set and second input character set represent different versions of the same characters (e.g., letters). In the shown example, the virtual keyboard 2220 inputs a first version of a character from the first input character set when the virtual keyboard 2220 is in the first input state, and inputs a second version of the character from the second input character set when the virtual keyboard 2220 is in the second input state. In some examples, the first version of a character is an upper case character of a letter associated with a respective character key 2222, and the second version of the character is a lower case character of a letter associated with a respective character key 2222.

Maintaining the appearance of the character keys 2222 between the input states of the virtual keyboard 2220 reduces the visual distraction to the user, may reduce strain on the user's eyes by avoiding changes in the displayed characters of the virtual keyboard 2220, and is less demanding on the user interface of the electronic device 100. Moreover, the appearance of the first version of the characters in the first input character set may be easier to read, more aesthetically pleasing and/or more visible than the appearance of the second version of the characters in the second input character set. In the shown example, upper case characters (the first version of the characters) are displayed in the character keys 2222 in each of the first and second input states of the virtual keyboard 2220 since upper case characters have been found to be more aesthetically pleasing, easier to read and to reduce strain on the user's eye. However, lower case characters (the second version of the characters) may be displayed in the character keys 2222 in other examples.

From the device perspective, an advantage of maintaining the appearance of the character keys 2222 between input states is that much less memory (or storage) resources are required. For instance, instead of having to maintain a set of visual assets for both lower and upper case characters, the device only needs to have access to upper case characters. It will be appreciated that the input character sets for multiple languages are often stored on the device, for example during manufacture, so that the device can operate in a number of markets "out of the box". Accordingly, the conservation in resources may become significant as the number of supported languages increases as each language, or nearly each language, has upper and lower case characters. Moreover, the use of high resolution displays for the touchscreen 118 means that the resources used to maintain a set of visual assets for both lower and upper case characters increases further, thereby increasing the conservation in resources.

In other examples, transitioning to the second input state may include transitioning the characters displayed on the keys of the virtual keyboard 2220 from the characters in the first input character set to the characters in the second input character set. In some examples, the displayed character transition is performed immediately after the first touch gesture is detected. In other examples, the displayed character transition is performed gradually. The gradual character display transition may be performing using any of a number of transition effects such as fading in and out between the old and new characters, shrinking and enlarging between the old and new characters, and the like.

The position, layout and/or display of the keys typically remain constant through the displayed character transition. This may be performed by only transitioning the characters displayed on each key but not the rendering of the keys themselves. This increases computational efficiency by reducing the processing strain caused by graphics rendering. In some examples, this may reduce the visual distraction to the user. In some examples, this may allow a user to more quickly focus on the new characters, and in some instances may reduce strain on the user's eyes.

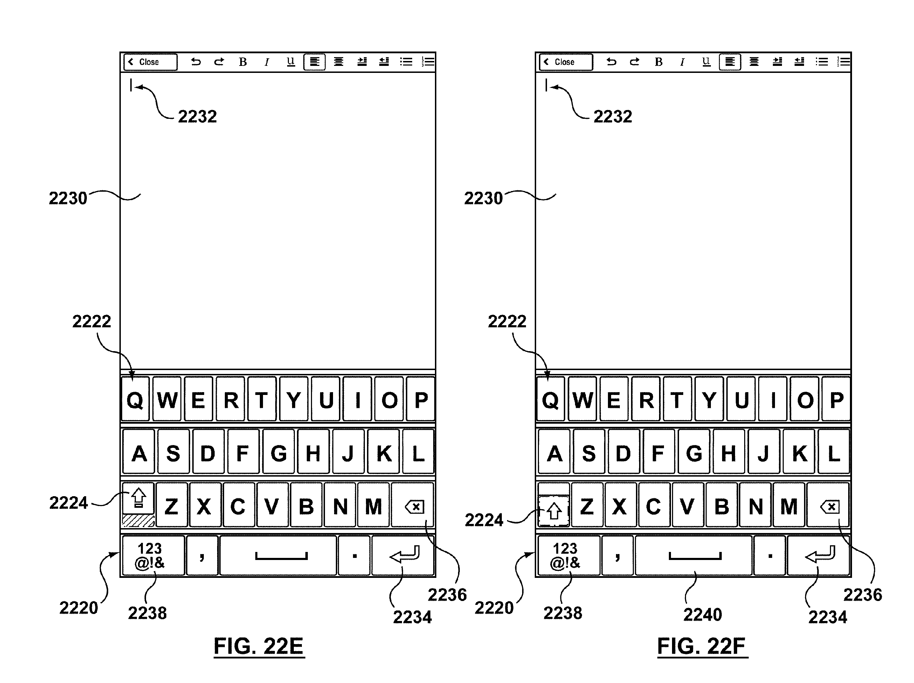

The appearance of the designated key (e.g., "Shift" key 2224) is changed in the second input mode to provide a visual cue indicating the current input state. Fig. 22E shows an example of the user interface screen when the virtual keyboard 2220 is in the second input state. The virtual keyboard 2220 is generally similar to that shown in Fig. 22A with the notable exception that a first visual cue that the virtual keyboard 2220 is in the second input state is provided. The first visual cue is displayed in association with the designated key ("Shift" key 2224). In the shown example, the first visual cue comprises displaying the designated key in a first alternative format rather than the normal format displayed in Fig. 22A.

In some examples, at least a portion of the "Shift" key 2224 is highlighted. Examples of highlighting a key include changing a background color of the key, backlighting the key, brightening the key, underlining the character displayed in the key, bolding the character displayed in the key, italicizing the character displayed in the key, changing the character displayed in the key, changing the color of the character displayed in the key, changing the size of the key, changing the shape of the key, using combinations thereof, or in any other way making the key more visible.

In the shown example, a horizontal bar at the bottom of the "Shift" key 2224 is displayed in a color different from the remainder of the virtual keyboard 2220, or is otherwise highlighted. In other examples, the entire "Shift" key 2224 may be highlighted. In yet other examples, a different form of visual cue may be provided.

The slider and its associated gesture emulates the physical interaction of a slide lock or switch which is a common mechanism for changing the state of a device such an electronic device which will be familiar to many users having prior experience with such devices. The slider GUI-gesture combination is believed to have potential advantages in several respects, particularly with regards to providing a more natural interaction with the electronic device 100. Providing more natural interaction with the electronic device 100 involves identifying efficient gestures which are relatively easy to perform, relatively easy to remember, have discoverability which allows users to "discover" functions during normal use without formal training, and which can be differentiated from other gestures by users (and by the device) relatively easily. Arbitrary or poorly considered gesture-action assignments tend to create awkward and unnatural user experiences which make the required interaction harder to perform, harder to remember, undiscoverable (or at least less discoverable), and harder to differentiate from other gestures by users.

The slider GUI-gesture combination is believed to be relatively easy to perform, relatively easy to remember, has discoverability which allows users to "discover" this function during normal use without formal training, and which can be differentiated from other gestures by users (and by the device) relatively easily.

At block 2170, the electronic device 100 and/or touch-sensitive display 118 monitor for touch gestures at the designated key in the virtual keyboard 2220 for changing the input state of the virtual keyboard 2220 from the second input state to the first input state. The electronic device 100 and/or touch-sensitive display 118 may also monitor for other touch gestures at the same time.

At block 2180, the electronic device 100 transitions the virtual keyboard 2220 from the second input state to the first input state when a designated touch gesture is detected and the virtual keyboard 2220 is in the second input state. In some examples, the designated touch gesture is a tap. Transitioning the virtual keyboard 2220 to the first input state includes changing the inputs associated with each key from the second input character set to the first input character set. Once transitioned to the first input state, activating (e.g., tapping) a key will register the associated character or function for the respective key in the first input character set.

As described above, in the shown example the characters displayed in the virtual keyboard 2220 do not change when the virtual keyboard 2220 is transitioned to the second input state even though the character keys 2222 in the virtual keyboard 2220 are associated with the second input character set rather than the first input character set. Accordingly, no change in appearance of the keys is required in such examples.

In other examples in which the characters displayed on the keys of the virtual keyboard 2220 change, the change in the appearance of the keys is reversed when the virtual keyboard 2220 is transitioned from the second input state to the first input state. In some examples, the displayed character transition is performed immediately after the designated touch gesture (e.g., tap) is detected. In other examples, the displayed character transition is performed gradually. The gradual character display transition may be performing using any of a number of transition effects such as fading in and out between the old and new characters, shrinking and enlarging between the old and new characters, and the like.

Referring again to block 2130, in the shown example, the electronic device 100 transitions the virtual keyboard 2220 from the first input state to the second input state when a second touch gesture, such as a press-and-hold gesture, is detected and the virtual keyboard 2220 is in the first input state. A press-and-hold gesture is press or touch which exceeds a threshold duration of time (e.g., 1 second). The press-and-hold gesture provides an alternative input for invoking the second input state when the virtual keyboard 2220 is in the first input state. In other examples, a different gesture may be provided an alternative input for invoking the second input state when the virtual keyboard 2220 is in the first input state. Another advantage of the upward drag or swipe over the press-and-hold gesture is that it may, but doesn't have to, be performed more quickly (e.g., with a rapid upward swipe or flick gesture) rather than waiting for the timeout of the press-and-hold gesture (e.g., waiting for the threshold duration to be exceeded).

Transitioning the virtual keyboard 2220 to the second input state occurs in the same manner as described previously and the operation of the second input state is the same as that described previously regardless of the difference in input paths by which the virtual keyboard 2220 transitions to the second input state. As above, the virtual keyboard 2220 remains in the second input state until further input to transition the virtual keyboard 2220 from the second input state to the first input state is detected. In some examples, an animation of the transition GUI is displayed before or during the transition of the virtual keyboard 2220 from the first input state to the second input state. The animation illustrates the slider and the movement of the slider button 2258 along the slider bar 2252 between the initial position and the terminal position. The animation provides a hint or visual cue about the availability of the slider UI and the first touch gesture as an alternative input to the press-and-hold gesture for invoking the second input state. The first touch gesture (e.g., upward drag or swipe) may facilitate the changing of input states compared with the press-and-hold gesture.

Referring again to block 2130, in the shown example, the electronic device 100 transitions the virtual keyboard 2220 from the first input state to a third input state when a third touch gesture, such as a tap, is detected and the virtual keyboard 2220 is in the first input state. The third input state, in at least some examples, is invoked only from the first input state. The third input state is similar to the second input state except that the virtual keyboard 2220 remains in the third input state for only a single character input. The virtual keyboard 2220 inputs a second version of a character from the second input character set when the virtual keyboard 2220 is in the third input state as mentioned previously. The virtual keyboard 2220 automatically transitions from the third input state to the first input state when character input is detected, i.e. in response to detecting input associated with one of the character keys 2222. The input activating the character key 2222 may be a tap in association with a character key 2222 in the virtual keyboard 2220. The input character is typically displayed in the input field 2230 as mentioned previously.

The transitioning between the first input state and the third input state occurs in a manner similar to that described above in connection with the first input state and second input state of the virtual keyboard 2220. That is, the transitioning may or may not comprise a change in the displayed characters depending on the example, consistent with the examples described above.

The appearance of the designated key (e.g., "Shift" key 2224) is changed in the third input mode to provide a visual cue indicating the current input state. Fig. 22F shows an example of the user interface screen when the virtual keyboard 2220 is in the third input state. The virtual keyboard 2220 is generally similar to that shown in Fig. 22A with the notable exception that a second visual cue that the virtual keyboard 2220 is in the third input state is provided. The second visual cue is different from the first visual cue so that users can determine when the virtual keyboard 2220 is in the second or third input state. The second visual cue is displayed in association with the designated key (e.g., "Shift" key 2224). In the shown example, the second visual cue comprises displaying the designated key in a second alternative format rather than the normal format displayed in Fig. 22A.

In some examples, at least a portion of the "Shift" key 2224 is highlighted. Examples of highlighting a key are described above. In the shown example, the edge around the "Shift" key 2224 is displayed in a color different from the remainder of the virtual keyboard 2220 or otherwise highlighted. In other examples, the entire "Shift" key 2224 may be highlighted. In yet other examples, a different form of visual cue may be provided.

The virtual keyboard 2220 illustrated in Figs. 22A-22F represents an example of a first input character set. Any combination of characters is possible for the first input character set. The example arrangement of the characters on the associated keys of the virtual keyboard shown in Figs. 22A-22F may be varied from that shown in Figs. 22A-22F in other examples.

The above described example shown in Figs. 22A to 22F provides a virtual "Shift lock" for locking the "Shift" key 2224; however, similar functionality may be provided for other designated keys such as other alternative function keys. In other examples, the alternative function key lock ("key lock") functionality described above may be applied to the "Symbol" key 2238. In yet other examples, "key lock" functionality may be applied to one or both of the "Shift" key 2224 or the "Symbol" key 2238.

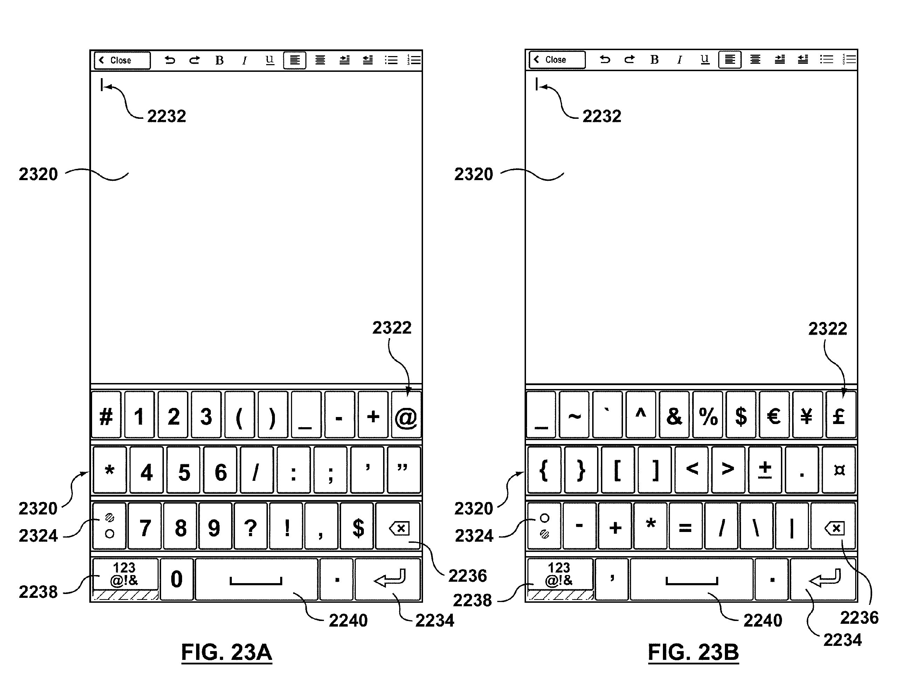

Fig. 23A shows an example of a virtual keyboard 2320 including a plurality of character keys 2322 when the virtual keyboard 2320 is in a second input state. As described above, the virtual keyboard 2220 remains in the second input state until further input to transition the virtual keyboard 2220 from the second input state to the first input state is detected.

The virtual keyboard 2320 in Fig. 23A includes a second input character set. The second input character set in the shown example includes numeric characters, symbols and punctuation. In some examples, some characters in the first input character set may also be included in the second input character set. For example, the period, comma and space characters appear in both the example first input character set in Figs. 22A-22F as well as the example second input character set in Fig. 23A. In each input state, the characters appearing in both input character sets can be associated with the same key or with a different key depending on the example. Whether an input character is associated with the same key or a different key may depend on the particular input character. In the shown example, the period character is associated with the key in the bottom row, second from the right in both the first input character set in Figs. 22A-22F and the second input character set in Fig. 23B. In contrast, the comma character is associated with a key in the bottom row in the first input character set, whereas the comma character is associated with a key in the second row from the bottom in the second input character set.

Fig. 23B shows an example of a virtual keyboard 2320 including a plurality of character keys 2322 when the virtual keyboard 2320 is in the second input state. As described above, the virtual keyboard 2220 remains in the second input state until further input to transition the virtual keyboard 2220 from the second input state to the first input state is detected.

The virtual keyboard 2320 in Fig. 23B includes a third input character set. The third input character set in the shown example includes additional symbols and punctuation which are not included in the second input character set. In some examples, some characters in the first input character set may also be included in the second input character set. In some examples, some characters in the first input character set and/or second input character set may also be included in the third input character set. For example, the period, comma and space characters appear in the example first input character set, second input character set and third character set. As mentioned previously with respect to the second input character set, the characters appearing in the various input character sets can be associated with the same key or with a different key depending on the example. Whether an input character is associated with the same key or a different key may depend on the particular input character.

In the examples of Fig. 22A, 23A and 23B, the number and arrangement of keys in the virtual keyboard is the same between the first, second and third input character sets to assist in user adoption and ease of use. In such examples, the constant number and configuration of keys allows makes targeting easier as users can rely upon constant key positions. It is only the associated input characters which change between the various input character sets. This has been found to be advantageous when compared to solutions in which the number of keys and/or key configuration changes. However, in other examples the number of keys and key configuration could change between input states.

The transitioning between the first input character set shown in Fig. 22A to 22F, the second input character set shown in Fig. 23A, and the third input character set shown in Fig. 23B comprises transitioning the characters displayed on the keys of the virtual keyboard in the various input character sets. Unlike the example described in connection with Fig. 22A-22F in which the "Shift" key 2224 is used to change a version of the same character, the second input character set and third input character set shown in Fig. 23A and 23B are directed to different characters. Accordingly, the displayed characters in the virtual keyboard are changed to inform the user of the new characters associated with the respective keys.

In some examples, the displayed character transition is performed immediately after the relevant touch gesture is detected. In other examples, the displayed character transition is performed gradually. The gradual character display transition may be performing using any of a number of transition effects such as fading in and out between the old and new characters, shrinking and enlarging between the old and new characters, and the like.

The position, layout and/or display of the keys typically remain constant through the displayed character transition. This may be performed by only transitioning the characters displayed on each key but not the rendering of the keys themselves. This increases computational efficiency by reducing the processing strain caused by graphics rendering. In some examples, this may reduce the visual distraction to the user. In some examples, this may allow a user to more quickly focus on the new characters, and in some instances may reduce strain on the user's eyes.

The appearance of the "Symbol" key 2238 is changed in the second input state shown in Fig. 23A and 23B to provide a visual cue indicating the current input state. In Fig. 23A and 23B, a first visual cue that the virtual keyboard 2320 is in the second input state is provided. The first visual cue is displayed in association with the "Symbol" key 2238. In the shown example, the first visual cue comprises displaying the designated key in a first alternative format rather than the normal format displayed in Fig. 22A. In the shown example, the first visual cue used for the "Symbol" key 2238 is the same or similar to the first visual cue used for the "Shift" key 2224 described above.

The first visual cue, in some examples, comprises highlighting at least a portion of the "Symbol" key 2238. Examples of highlighting a key are described above. In the shown example, a horizontal bar at the bottom of the "Symbol" key 2238 is displayed in a color different from the remainder of the virtual keyboard 2320, or is otherwise highlighted. In other examples, the entire "Symbol" key 2238 may be highlighted. In yet other examples, a different form of visual cue may be provided.

In Fig. 23A and 23B, the "Shift" key 2224 has been replaced with a toggle key 2324 for toggling (i.e., switching) between the second input character set and the third input character set when in the second input state or third input state. As part of the switching, the virtual keyboard 2320 is transitioned from the second input character set to the third input character set in a similar manner to that described previously in connection with the first input character set and second third input character set.

When the second input character set is active, the toggle key 2324 can be activated to switch the virtual keyboard to the third input character set. When the third input character set is active, the toggle key 2324 can be activated to switch the virtual keyboard to the second input character set. The toggle key 2324 does not appear in the first input character set. The toggle key 2324 provides a visual cue as to the current input character set of the virtual keyboard as well as the availability of an alternative input character set. In the shown example, a first visual indicator is highlighted (changed in color, etc.) when the second input character set is active and a second visual indicator is highlighted (changed in color, etc.) when the third input character set is active. In the shown example, the first and second indicators are represented by a pair of vertically aligned virtual buttons, baubles or lights. Other visual cues as to which of the second input character set or third input character set is active, both within the toggle key 2324 and outside of the toggle key 2324, are possible.

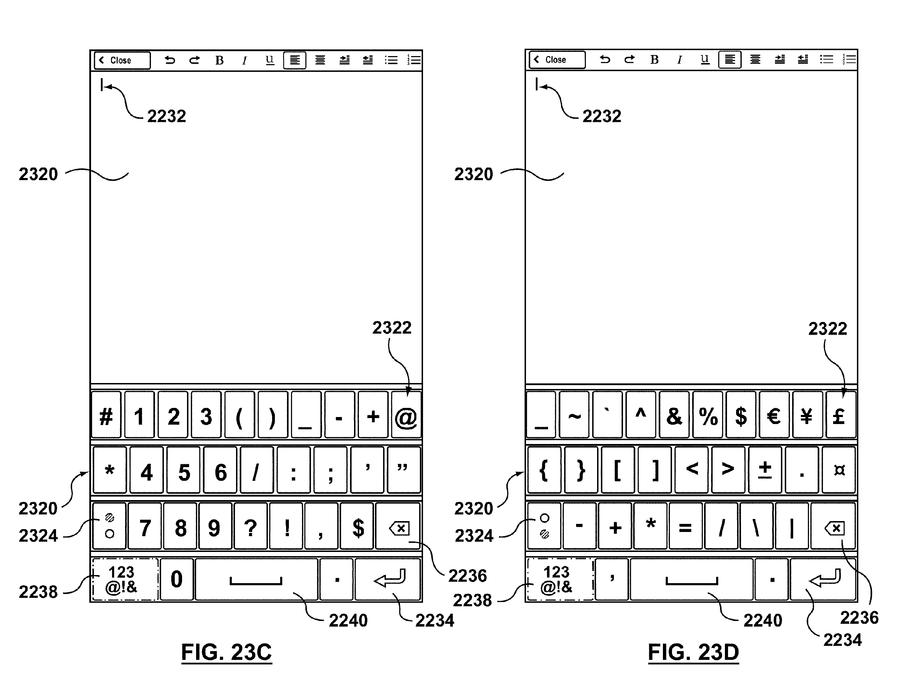

Fig. 23C shows another example of the virtual keyboard 2320 including a plurality of character keys 2322 when the virtual keyboard 2320 is in a third input state. The virtual keyboard 2320 shown in Fig. 23C includes the second input character set of Fig. 23A. Fig. 23D shows another example of the virtual keyboard 2320 including a plurality of character keys 2322 when the virtual keyboard 2320 is in a third input state. The virtual keyboard 2320 shown in Fig. 23D includes the third input character set of Fig. 23B.

The third input state is similar to the second input state except that the virtual keyboard 2320 remains in the third input state for only a single character input. The virtual keyboard 2320 automatically transitions from the third input state to the first input state when character input is detected, i.e. in response to detecting input associated with one of the character keys 2322. The input activating the character key 2322 may be a tap in association with a character key 2322 in the virtual keyboard 2320. The input character is typically displayed in the input field 2230 as mentioned previously.

The appearance of the "Symbol" key 2238 is changed in the third input state shown in Fig. 23C and 23D to provide a visual cue indicating the current input state. In Fig. 23C and 23D, a second visual cue that the virtual keyboard 2320 is in the third input state is provided. The second visual cue is displayed in association with the "Symbol" key 2238. In the shown example, the second visual cue comprises displaying the designated key in a second alternative format rather than the normal format displayed in Fig. 22A. In the shown example, the second visual cue used for the "Symbol" key 2238 is the same or similar to second visual cue used for the "Shift" key 2224 described above. The second visual cue is different from the first visual cue in Fig. 23A and 23B so that users can determine when the virtual keyboard 2320 is in the second or third input state.

The second visual cue, in some examples, comprises highlighting at least a portion of the "Symbol" key 2238. Examples of highlighting a key are described above. In the shown example, the edge around the "Symbol" key 2238 is displayed in a color different from the remainder of the virtual keyboard 2220 or otherwise highlighted. In other examples, the entire "Symbol" key 2238 may be highlighted. In yet other examples, a different form of visual cue may be provided.

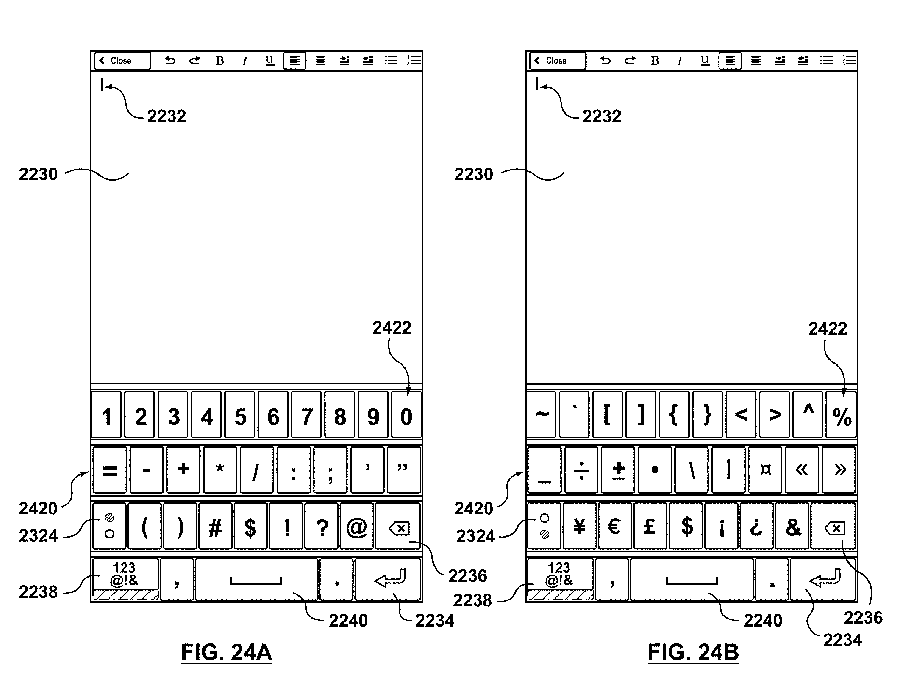

Figs. 24A-24D illustrate further examples of a virtual keyboard 2420 including a plurality of character keys 2422. In Fig. 24A and 24B, the virtual keyboard 2420 is in the second input state. The virtual keyboard 2420 remains in the second input state until further input to transition the virtual keyboard 2420 from the second input state to the first input state is detected as in previously described examples. The virtual keyboard 2420 in Fig. 24A includes an alternative second input character set comprised of numeric characters, symbols and punctuation similar to but different from the second input character set shown in Fig 23A.

The virtual keyboard 2420 in Fig. 24B includes an alternative third input character set comprised of additional symbols and punctuation which are not included in the second input character set of Fig. 24A. The alternative third input character set comprised of numeric characters, symbols and punctuation is similar to but different from the third input character set shown in Fig 24A.

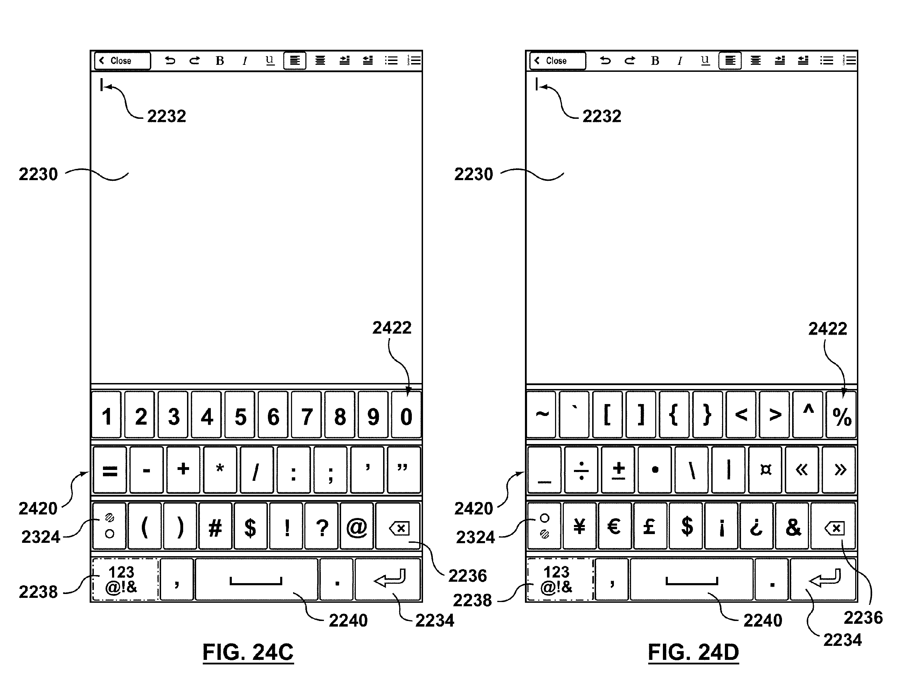

Fig. 24C shows another example of the virtual keyboard 2420 when the virtual keyboard 2420 is in a third input state. The virtual keyboard 2420 shown in Fig. 24C includes the second input character set of Fig. 24A. Fig. 24D shows another example of the virtual keyboard 2420 when the virtual keyboard 2420 is in the third input state. The virtual keyboard 2420 shown in Fig. 24D includes the third input character set of Fig. 24B.

The third input state is similar to the second input state except that the virtual keyboard 2420 remains in the third input state for only a single character input. The virtual keyboard 2420 automatically transitions from the third input state to the first input state when character input is detected, i.e. in response to detecting input associated with one of the character keys 2422. The input activating the character key 2422 may be a tap in association with a character key 2422 in the virtual keyboard 2420. The input character is typically displayed in the input field 2230 as mentioned previously.

The virtual keyboards illustrated in Figs. 23A-24D represent examples of a second input character set and a third input character set, respectively. Any combination of characters is possible for the second and third input character sets. The example arrangement of the characters on the associated keys of the virtual keyboard shown in Figs. 23A-24D may be varied from that shown.

In the above described examples, the input character sets associated with the various input states include alphanumeric characters, symbols, punctuation in a common language. In other examples, the input character sets associated with the various inputs states may include characters from different languages including but not limited to accents, alphabetic characters with accents, or other symbols and characters associated with a particular language. In yet other examples, the input character sets associated with the various inputs states may include emoticons, command or function inputs, navigation inputs, or other characters.

While the various methods of the present disclosure have been described in terms of functions shown as separate blocks in the Figures, the functions of the various blocks may be combined during processing on an electronic device. Furthermore, some of the functional blocks in the Figures may be separated into one or more sub steps during processing on an electronic device.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

## Claims

1. A method for changing an input state of a virtual keyboard for a touch-sensitive display of an electronic device, the method comprising:
displaying the virtual keyboard on the touch-sensitive display, wherein the virtual keyboard includes a plurality of character keys, each key in the plurality of character keys corresponding to a character in a first input character set when the virtual keyboard is in a first input state; and
displaying a graphical user interface (GUI) element which overlays at least a designated key when a designated touch gesture is detected in association with the designated key when the virtual keyboard is in the first input state, wherein the GUI element includes a gestural guide for a first touch gesture which transitions the virtual keyboard from the first input state to a second input state.

2. The method of claim 1, further comprising:
transitioning the virtual keyboard from the first input state to the second input state in response to detecting the first touch gesture when the GUI is displayed.

3. The method of claim 1 or claim 2, further comprising:
transitioning the virtual keyboard from the second input state to the first input state in response to detecting a designated touch input when the virtual keyboard is in the second input state.

4. The method of claim 3, wherein the virtual keyboard remains in the second input state until the designated touch input is detected.

5. The method of claim 3 or claim 4, wherein the designated touch input is a tap associated with the designated key.

6. The method of any one of claims 1 to 5, further comprising:
transitioning the virtual keyboard from the first input state to the second input state in response to detecting a second touch gesture associated with the designated key when the GUI is not displayed.

7. The method of claim 6, wherein the second touch gesture is a press-and-hold associated with the designated key.

8. The method of any one of claims 1 to 7, further comprising:
transitioning the virtual keyboard from the first input state to a third input state in response to detecting a third touch gesture associated with the designated key when the GUI is not displayed.

9. The method of claim 8, further comprising:
transitioning the virtual keyboard from the third input state to the first input state in response to detecting a character input when the virtual keyboard is in the third input state.

10. The method of claim 8 or claim 9, wherein the virtual keyboard inputs a first version of a character in the first input character set when the virtual keyboard is in the first input state, wherein the virtual keyboard inputs a second version of a character in the first input character set when the virtual keyboard is in a third input state, wherein the first version of a character in the first input character set is preferably a lower case letter and the second version of a character in the first input character set is preferably an upper case letter, or
wherein each key in the plurality of character keys corresponds to a character in a second input character set when the virtual keyboard is in the third input state.

11. The method of any one of claims 8 to 10, wherein the third touch gesture is a tap associated with the designated key.

12. The method of any one of claims 1 to 11, wherein the first touch gesture is a drag or swipe associated with the designated key.

13. The method of any one of claims 1 to 12, wherein the designated touch gesture is a moving touch gesture.

14. The method of any one of claims 1 to 13, wherein the virtual keyboard inputs a first version of a character in the first input character set when the virtual keyboard is in the first input state, wherein the virtual keyboard inputs a second version of a character in the first input character set when the virtual keyboard is in the second input state, wherein the first version of a character in the first input character set is preferably a lower case letter and the second version of a character in the first input character set is preferably an upper case letter.

15. The method of claims 1 to 13, wherein each key in the plurality of character keys corresponds to a character in a second input character set when the virtual keyboard is in the second input state,
wherein the method preferably further comprises transitioning the virtual keyboard from the second input character set to a third input character set in response to detecting a designated touch input associated with another designated key when the virtual keyboard is in the second input state;
wherein the other designated key is preferably a toggle key;
wherein the method preferably further comprises displaying a first visual cue in association with the designated key when the virtual keyboard includes the second character set, and displaying a second visual cue in association with the designated when the virtual keyboard includes the third character set.
